# EUROPEAN PATENT APPLICATION

(11) **EP 4 796 963 A1**
(43) Date of publication of application: **26.08.2026**
(21) Application number: 24879760.7
(22) Date of filing: 17.10.2024
(51) Int. Cl.: G02B 5/20, B32B 7/06, B32B 7/023, B32B 37/24, B32B 38/18

(54) **METHOD FOR MANUFACTURING WAVELENGTH CONVERSION SHEET**

(30) Priority: 20.10.2023 JP 2023180821; 20.10.2023 JP 2023180823; 20.10.2023 JP 2023180825
(71) Applicant: Dai Nippon Printing Co., Ltd., Tokyo 162-8001 (JP)
(72) Inventor: SAKAMOTO, Takeshi, Tokyo 162-8001 (JP); TAMURA, Shuichi, Tokyo 162-8001 (JP); MORIMOTO, Taro, Tokyo 162-8001 (JP)
(74) Representative: Beck Greener LLP
(86) International application number: PCT/JP2024/036915
(87) International publication number: WO 2025/084339

(57) **Abstract**

Provided is a method for producing a wavelength conversion sheet that can suppress the occurrence of curling in combination with achievement of thinness for the wavelength conversion sheet. A method for producing a wavelength conversion sheet, comprising the following steps 1 to 3: step 1: a step of forming a quantum dot-containing layer on a first primer layer of a first quantum dot protective film comprising the first primer layer, a first base material, a first barrier layer, and a protective base material for the first barrier layer by applying a coating liquid for quantum dot-containing layer formation onto the first primer layer, wherein the protective base material for the first barrier layer for use therein has been formed to be peelable from the first quantum dot protective film; step 2: a step of obtaining an in-process product of a wavelength conversion sheet by attaching a surface of a second quantum dot protective film comprising a second primer layer, a second base material, and a second barrier layer to the quantum dot-containing layer, wherein the surface side attaching to the quantum dot-containing layer is on a second primer layer side of the second quantum dot protective film; and step 3: a step of irradiating the quantum dot-containing layer of the in-process product with an ultraviolet ray.

## Description

### Technical Field

The present disclosure relates to a method for producing a wavelength conversion sheet.

### Background Art

With the development of a personal computer, the demand for a liquid crystal display device has been increasing. Recently, the penetration rate of a home-use liquid crystal display television has been increasing, and further, a smartphone and a tablet terminal have also been becoming widespread. Because of these, the present situation is that the market for a liquid crystal display device is expanding further.

The liquid crystal display device generally has a color filter, a liquid crystal cell, and a backlight. In the liquid crystal display device, the intensity of light is controlled by the shutter function of the liquid crystal layer in a liquid crystal cell, and the color of each pixel is displayed by dividing the color into the three primary colors of R, G, and B by the color filters. In this manner, the liquid crystal display device displays an image.

Conventionally, a cold cathode tube has been used as a light source of the backlight of the liquid crystal display device. However, in view of low power consumption and space saving, the light source of the backlight has been switched from the cold cathode tube to an LED.

As the LED used as a light source of a backlight, a white LED formed by combining a blue LED and a YAG-based yellow phosphor is widely used. The white LED has a broad spectral distribution of emission wavelength and is called pseudo-white.

On the other hand, in recent years, the development of a backlight using a quantum dot has also been promoted. The quantum dot refers to a nanometer-sized fine particle of a semiconductor.

The basic configuration of a backlight using a quantum dot is a combination of a light source that generates primary light such as a blue LED, which emits blue light, and a quantum dot.

The quantum dot is, for example, a nano-sized compound semiconductor fine particle composed of a semiconductor fine particle composed of a core which is CdSe and a shell which is ZnS, and a ligand which covers the periphery of the shell. The particle size of the quantum dot is smaller than the Bohr radius of an exciton of the compound semiconductor, and thus the quantum confinement effect appears. Because of this, the quantum dot has a higher light emission efficiency than the conventionally used phosphor using a rare earth ion as an activator, and can realize a high light emission efficiency of 90% or more.

The emission wavelength of the quantum dot depends on the bandgap energy of the quantized compound semiconductor fine particle, and thus an arbitrary emission wavelength can be obtained by changing the particle size of the quantum dot. A backlight that combines such a quantum dot with a blue LED or the like can realize high light emission efficiency and high color purity (for example, Patent Literatures 1 and 2).

In addition, the quantum dot is also used for lighting, a quantum dot laser, or the like, in addition to a backlight for a liquid crystal display device.

While the quantum dot has the above excellent characteristics, a problem thereof is that the quantum dot is easily degraded by the influence of moisture, oxygen, or the like. Because of this, it is preferable to protect the surfaces of both sides of a quantum dot-containing layer with a protective film including a barrier layer. For example, Patent Literatures 3 and 4 propose a wavelength conversion sheet in which surfaces of both sides of a quantum dot-containing layer are protected by a protective film.

### Citation List

### Patent Literature

PTL1: WO 2012/132239
PTL2: JP 2015-18131 A
PTL3: WO 2022/039013
PTL4: WO 2022/039015

### Summary of Invention

### Technical Problem

However, the wavelength conversion sheets of Patent Literatures 3 and 4 may suffer from the occurrence of curling. The wavelength conversion sheet with the occurrence of curling may cause lowered workability when being incorporated in a backlight. In addition, the wavelength conversion sheet with the occurrence of curling may undergo the generation of cracks in the barrier layer because of the curling.

In order to suppress the curling of a wavelength conversion sheet, it is contemplated to give a larger thickness to the protective film. However, thinness is required for members for liquid crystal display devices in recent years. Giving a larger thickness to the protective film prevents the wavelength conversion sheet from being thin.

An object of a first embodiment of the present disclosure is to provide a method for producing a wavelength conversion sheet that can suppress the occurrence of curling in combination with achievement of thinness for the wavelength conversion sheet.

An object of a second embodiment of the present disclosure is to provide a method for producing a wavelength conversion sheet that can suppress the occurrence of curling.

An object of a third embodiment of the present disclosure is to provide a method for producing a wavelength conversion sheet that can suppress the occurrence of curling.

### Solution to Problem

The present disclosure provides the following <A1>.
<A1> A method for producing a wavelength conversion sheet, comprising the following steps 1 to 3:
   step 1: a step of forming a quantum dot-containing layer on a first primer layer of a first quantum dot protective film comprising at least the first primer layer, a first base material, a first barrier layer, and a protective base material for the first barrier layer by applying a coating liquid for quantum dot-containing layer formation onto the first primer layer, wherein the protective base material for the first barrier layer for use therein has been formed to be peelable from the first quantum dot protective film;
   step 2: a step of obtaining an in-process product of a wavelength conversion sheet by attaching a surface of a second quantum dot protective film comprising at least a second primer layer, a second base material, and a second barrier layer to the quantum dot-containing layer, wherein the surface side attaching to the quantum dot-containing layer is on a second primer layer side of the second quantum dot protective film, and the in-process product comprises the first quantum dot protective film, the quantum dot-containing layer, and the second quantum dot protective film in presented order; and
   step 3: a step of irradiating the quantum dot-containing layer of the in-process product with an ultraviolet ray.
   Furthermore, the present disclosure provides the following <B1>.
<B1> A method for producing a wavelength conversion sheet, comprising the following steps 1 to 4:
   step 1: a step of forming a quantum dot-containing layer on a first primer layer of a first quantum dot protective film comprising at least the first primer layer, a first base material, and a first barrier layer by applying a coating liquid for quantum dot-containing layer formation onto the first primer layer;
   step 2: a step of irradiating the quantum dot-containing layer with a first ultraviolet ray;
   step 3: a step of obtaining an in-process product of a wavelength conversion sheet by attaching a surface of a second quantum dot protective film comprising at least a second primer layer, a second base material, and a second barrier layer to the quantum dot-containing layer, wherein the surface side attaching to the quantum dot-containing layer is on a second primer layer side of the second quantum dot protective film, and the in-process product comprises the first quantum dot protective film, the quantum dot-containing layer, and the second quantum dot protective film in presented order; and
   step 4: a step of irradiating the quantum dot-containing layer of the in-process product with a second ultraviolet ray, provided that a relationship of integrated dose of first ultraviolet ray < integrated dose of second ultraviolet ray is satisfied.
   Furthermore, the present disclosure provides the following <C1>.
<C1> A method for producing a wavelength conversion sheet, comprising the following steps 1 to 5:
   step 1: a step of obtaining a first laminated body by applying a coating liquid for first quantum dot-containing layer formation onto a first primer layer of a first quantum dot protective film comprising at least the first primer layer, a first base material, and a first barrier layer, wherein the first laminated body comprises a first quantum dot-containing layer on the first primer layer of the first quantum dot protective film;
   step 2: a step of irradiating the first quantum dot-containing layer of the first laminated body with an ultraviolet ray;
   step 3: a step of obtaining a second laminated body by applying a coating liquid for second quantum dot-containing layer formation onto a second primer layer of a second quantum dot protective film comprising at least the second primer layer, a second base material, and a second barrier layer, wherein the second laminated body comprises a second quantum dot-containing layer on the second primer layer of the second quantum dot protective film;
   step 4: a step of irradiating the second quantum dot-containing layer of the second laminated body with an ultraviolet ray; and
   step 5: a step of obtaining a wavelength conversion sheet as a laminate of the first laminated body and the second laminated body by attaching a surface of the first laminated body on a first quantum dot-containing layer side and a surface of the second laminated body on a side having the second quantum dot-containing layer to each other.

### Advantageous Effects of Invention

The method for producing a wavelength conversion sheet in the first embodiment of the present disclosure can suppress the curling of a wavelength conversion sheet in combination with achievement of thinning for the wavelength conversion sheet. The method for producing a wavelength conversion sheet in the second embodiment of the present disclosure can suppress the curling of a wavelength conversion sheet. The method for producing a wavelength conversion sheet in the third embodiment of the present disclosure can suppress the curling of a wavelength conversion sheet.

### Brief Description of Drawings

[Fig. 1] Fig. 1 is a cross-sectional view showing an embodiment of a wavelength conversion sheet after completion of steps 1 to 3 in the method for producing a wavelength conversion sheet in the first embodiment of the present disclosure.
[Fig. 2] Fig. 2 is a cross-sectional view showing an embodiment of a wavelength conversion sheet after completion of steps 1 to 4 in the method for producing a wavelength conversion sheet in the first embodiment of the present disclosure.
[Fig. 3] Fig. 3 is a diagram for illustrating the state of curling in the first to third embodiments.
[Fig. 4] Fig. 4 is a cross-sectional view showing an embodiment of a wavelength conversion sheet obtained by the method for producing a wavelength conversion sheet in the second embodiment of the present disclosure.
[Fig. 5] Fig. 5 is a cross-sectional view showing an embodiment of a wavelength conversion sheet obtained by the method for producing a wavelength conversion sheet in the third embodiment of the present disclosure.

### Description of Embodiments

Hereinafter, embodiments of the present disclosure will be described.

Herein, the expression "AA to BB" in relation to numerical values means AA or more and BB or less.

### [Method for producing wavelength conversion sheet in first embodiment]

The method for producing a wavelength conversion sheet in the first embodiment of the present disclosure comprises the following steps 1 to 3:
step 1: a step of forming a quantum dot-containing layer on a first primer layer of a first quantum dot protective film comprising at least the first primer layer, a first base material, a first barrier layer, and a protective base material for the first barrier layer by applying a coating liquid for quantum dot-containing layer formation onto the first primer layer, wherein the protective base material for the first barrier layer for use therein has been formed to be peelable from the first quantum dot protective film;
step 2: a step of obtaining an in-process product of a wavelength conversion sheet by attaching a surface of a second quantum dot protective film comprising at least a second primer layer, a second base material, and a second barrier layer to the quantum dot-containing layer, wherein the surface side attaching to the quantum dot-containing layer is on a second primer layer side of the second quantum dot protective film, and the in-process product comprises the first quantum dot protective film, the quantum dot-containing layer, and the second quantum dot protective film in presented order; and
step 3: a step of irradiating the quantum dot-containing layer of the in-process product with an ultraviolet ray.

It is preferable for the method for producing a wavelength conversion sheet in the first embodiment of the present disclosure to further comprise the following step 4:
step 4: a step of peeling the protective base material for the first barrier layer from the first quantum dot protective film.

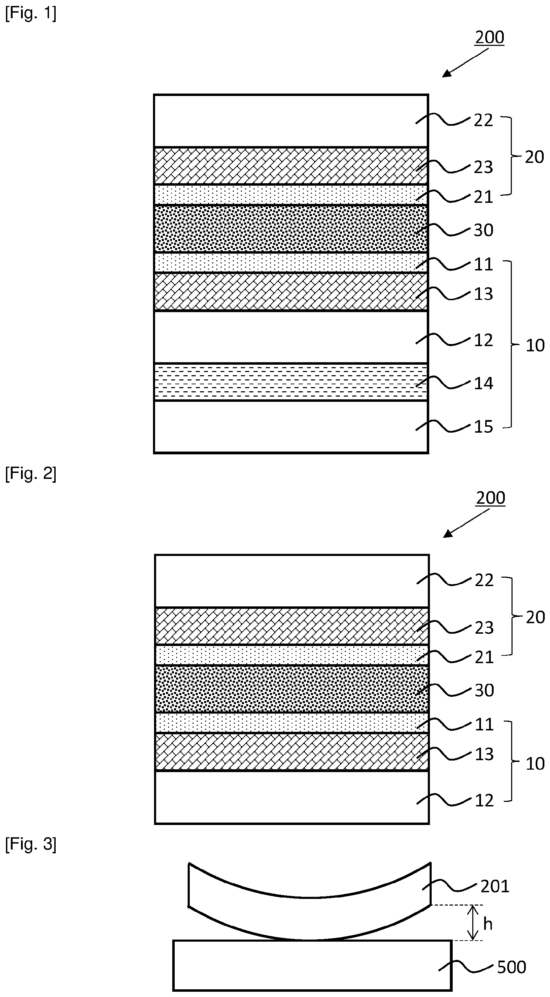

Fig. 1 is a cross-sectional view showing an embodiment of a wavelength conversion sheet 200 after completion of steps 1 to 3, and Fig. 2 is a cross-sectional view showing an embodiment of a wavelength conversion sheet 200 after completion of steps 1 to 4.

The wavelength conversion sheet 200 in Fig. 1 comprises: a first quantum dot protective film 10, a quantum dot-containing layer 30, and a second quantum dot protective film 20 in presented order. In Fig. 1, the first quantum dot protective film 10 comprises a first primer layer 11, a first barrier layer 13, and a first base material 12, and further comprises a first adhesive layer 14 and a protective base material 15 for the first barrier layer. In Fig. 1, the second quantum dot protective film 20 comprises a second primer layer 21, a second barrier layer 23, and a second base material 22. In Fig. 1, the first primer layer 11 and the second primer layer 21 are each in contact with the quantum dot-containing layer 30.

The wavelength conversion sheet 200 in Fig. 2 is given by peeling the first adhesive layer 14 and the protective base material 15 for the first barrier layer from the first quantum dot protective film 10 in the wavelength conversion sheet in Fig. 1.

The timing for peeling off the protective base material for the first barrier layer may be immediately after the production of the wavelength conversion sheet, or after completion of inspection of the wavelength conversion sheet after the production of the wavelength conversion sheet, or before incorporating the wavelength conversion sheet in a backlight. In short, step 4 can be performed at any of various timings. An entity to perform steps 1 to 3 and an entity to perform step 4 may be the same or different.

Figs. 1 and 2 are schematic cross-sectional views. It follows that Figs. 1 and 2 are each such a schematization for easy illustration that the scale and others for layers constituting the wavelength conversion sheet 200 are different from actual ones. The same applies to Fig. 3. The wavelength conversion sheet is not limited to the layer configurations in Figs. 1 and 2.

Fig. 3 is a diagram for illustrating the state of curling of the wavelength conversion sheet. Fig. 3 is a diagram common to the first, second, and third embodiments. In Fig. 3, the wavelength conversion sheet has a curled shape with both edges lifted.

The degree of curling of the wavelength conversion sheet 200 is determined through procedures of X1 to X4 shown below. The procedures of X1 to X4 are those common to the first, second, and third embodiments.
X1: The wavelength conversion sheet is cut to prepare a sample 201 of 100 mm × 100 mm in size.
X2: The sample 201 is placed on a horizontal stage 500 in such a manner that a surface on the first quantum dot protective film side faces the stage 500. For each of the four corners of the sample 201, the height of lifting from the horizontal stage 500, h, is measured. The mean of the first and second largest heights of the four heights, Ave1, is calculated. As the value of Ave1 is larger, it can be said that the degree of curling that forms a convex on the first quantum dot protective film side is higher.
X3: The sample 201 is placed on a horizontal stage 500 in such a manner that a surface on the second quantum dot protective film side faces the stage 500. For each of the four corners of the sample 201, the height of lifting from the horizontal stage 500, h, is measured. The mean of the first and second largest heights of the four heights, Ave2, is calculated. As the value of Ave2 is larger, it can be said that the degree of curling that forms a convex on the second quantum dot protective film side is higher.
X4: As Ave1 and Ave2 are both smaller, it can be said that the curling of the wavelength conversion sheet has been successfully suppressed.

As the larger of Ave1 and Ave2 is defined as Ave (max), Ave (max) is preferably 10.0 mm or less, more preferably 8.0 mm or less, and further preferably 5.0 mm or less. When Ave1 and Ave2 are each 10.0 mm or less, it is possible to more easily incorporate the wavelength conversion sheet in a backlight and liquid crystal display device. By setting Ave1 and Ave2 to 10.0 mm or less, the occurrence of a crack in the first barrier layer and second barrier layer can be easily suppressed. As can be understood from the description so far, "suppressing curling" is not limited to completely eliminating curling in the present specification, and the concept encompasses reducing the degree of curling. The description in the present paragraph is one common to the first, second, and third embodiments.

The method for producing a wavelength conversion sheet in the first embodiment of the present disclosure needs to comprise steps 1 to 3. It is preferable for the method for producing a wavelength conversion sheet in the first embodiment of the present disclosure to further comprise step 4.

The following explains the steps. Embodiments of materials to be used in steps 1 and 2 will be explained after explanation of step 4.

### <Step 1>

Step 1 is a step of forming a quantum dot-containing layer on a first primer layer of a first quantum dot protective film comprising at least the first primer layer, a first base material, a first barrier layer, and a protective base material for the first barrier layer by applying a coating liquid for quantum dot-containing layer formation onto the first primer layer. In step 1, the protective base material for the first barrier layer for use therein has been formed to be peelable from the first quantum dot protective film.

Herein, "peelable" for the protective base material for the barrier layer means that the peel strength of the protective base material for the barrier layer is 1.0 N/25 mm or less. The definition of being peelable presented here is one common to the first, second and third embodiments. A measurement method for the peel strength of the protective base material for the first barrier layer and a measurement method for the peel strength of the protective base material for the second barrier layer, the measurement methods given in the following, are ones common to the first, second, and third embodiments.

### <Measurement method for peel strength of protective base material for first barrier layer>

Three test pieces of 25 mm × 150 mm are cut out of the first quantum dot protective film. By using a tensile tester, peel strength in peeling the protective base material for the first barrier layer from the first quantum dot protective film is measured under measurement conditions shown below. If the protective base material for the first barrier layer has been laminated in a peelable manner with the first adhesive layer intervening therebetween, peel strength in peeling the protective base material for the first barrier layer and the first adhesive layer from the first quantum dot protective film is measured. The mean of measurements for the three test pieces is defined as the peel strength of the protective base material for the first barrier layer. The tensile tester is preferably one specified in JIS B7721: 2018.

### <Measurement conditions for peel strength>

- Temperature at measurement: 23°C
- Tensile speed: 300 mm/min
- Peel direction: 180°
- Chuck-to-chuck distance: 15 mm

### <Measurement method for peel strength of protective base material for second barrier layer>

The peel strength of the protective base material for the second barrier layer is measured in the same manner as in measuring the peel strength of the protective base material for the first barrier layer, except that three test pieces are cut out of the second quantum dot protective film.

In step 1, a quantum dot-containing layer is formed on a first primer layer of a first quantum dot protective film by applying a coating liquid for quantum dot-containing layer formation onto the first primer layer. It follows that the first primer layer and the quantum dot-containing layer are in contact with each other.

The coating liquid for quantum dot-containing layer formation includes: materials to constitute the quantum dot-containing layer such as quantum dots and a binder resin; and a diluting solvent as a component to be optionally added. The coating liquid for quantum dot-containing layer formation preferably includes an ultraviolet-curable resin composition as a binder component.

The coating liquid for quantum dot-containing layer formation can be applied onto the primer layer by a versatile application method such as bar coating, die coating, and gravure coating.

Examples of means to make the protective base material for the first barrier layer peelable from the first quantum dot protective film include a means to laminate the protective base material for the first barrier layer and the first base material or first barrier layer with an adhesive layer having weak adhesion force intervening therebetween.

In the first quantum dot protective film, the protective base material for the first barrier layer is preferably disposed farther from the first primer layer than the first base material and the first barrier layer. The protective base material for the first barrier layer is preferably formed over the first base material or the first barrier layer with a first adhesive layer having weak adhesion force intervening therebetween.

### <Step 2>

Step 2 is a step of obtaining an in-process product of a wavelength conversion sheet by attaching a surface of a second quantum dot protective film comprising at least a second primer layer, a second base material, and a second barrier layer to the quantum dot-containing layer, wherein the surface side attaching to the quantum dot-containing layer is on a second primer layer side of the second quantum dot protective film, and the in-process product comprises the first quantum dot protective film, the quantum dot-containing layer, and the second quantum dot protective film in presented order.

In step 2, a surface of the second quantum dot protective film on the second primer layer side is attached to the quantum dot-containing layer. It follows that the second primer layer and the quantum dot-containing layer are in contact with each other.

Attaching in step 2 can be performed by a versatile lamination technique.

A surface of the second quantum dot protective film on the second primer layer side and the quantum dot-containing layer can be attached to each other, for example, by utilizing the tackiness of the uncured ultraviolet-curable resin composition in the quantum dot-containing layer. Accordingly, it is preferable that a step of irradiating with an ultraviolet ray be not provided between step 1 and step 2.

### <Step 3>

Step 3 is a step of irradiating the quantum dot-containing layer of the in-process product with an ultraviolet ray.

The integrated dose of the ultraviolet ray in step 3 depends on the thickness of the quantum dot-containing layer and others and thus cannot be definitely specified, but is preferably 100 mJ/cm² or more and 5000 mJ/cm² or less, more preferably 150 mJ/cm² or more and 4000 mJ/cm² or less, and further preferably 200 mJ/cm² or more and 3000 mJ/cm² or less.

In step 3, the first quantum dot protective film side may be irradiated with the ultraviolet ray, and alternatively the second quantum dot protective film side may be irradiated with the ultraviolet ray.

### <Step 4>

Step 4 is a step of peeling the protective base material for the first barrier layer from the first quantum dot protective film.

The protective base material for the first barrier layer has been formed to be peelable from the first quantum dot protective film. Accordingly, step 4 can be performed at any of various timings. The timing for peeling off the protective base material for the first barrier layer may be immediately after the production of the wavelength conversion sheet, or after completion of inspection of the wavelength conversion sheet after the production of the wavelength conversion sheet, or before incorporating the wavelength conversion sheet in a backlight.

An entity to perform steps 1 to 3 and an entity to perform step 4 may be the same or different.

The following explains the reason why the method for producing a wavelength conversion sheet in the first embodiment of the present disclosure can suppress curling. First, the reason why conventional production methods for wavelength conversion sheets tend to cause the resulting wavelength conversion sheets to undergo the occurrence of curling will be explained.

Wavelength conversion sheets are conventionally produced through the following steps (1) to (3) (see Examples in PTLs 1 and 2).
Step (1): a step of forming a quantum dot-containing layer on a first primer layer of a first quantum dot protective film comprising the first primer layer, a first base material, and a first barrier layer by applying a coating liquid for quantum dot-containing layer formation onto the first primer layer.
Step (2): a step of obtaining an in-process product of a wavelength conversion sheet by attaching a surface of a second quantum dot protective film comprising a second primer layer, a second base material, and a second barrier layer to the quantum dot-containing layer, wherein the surface side attaching to the quantum dot-containing layer is on a second primer layer side of the second quantum dot protective film, and the in-process product comprises the first quantum dot protective film, the quantum dot-containing layer, and the second quantum dot protective film in presented order.
Step (3): a step of irradiating the quantum dot-containing layer of the in-process product with an ultraviolet ray.

If a wavelength conversion sheet is to be produced through steps (1) to (3), the coating liquid for quantum dot-containing layer formation more permeates the first primer layer, but less permeates the second primer layer. For this reason, the wavelength conversion sheet produced through steps (1) to (3) tends to satisfy the relationship of adhesive force between second primer layer and quantum dot-containing layer < adhesive force between first primer layer and quantum dot-containing layer.

Stress generated through the shrinkage of the quantum dot-containing layer tends to more readily propagate to a direction with stronger adhesive force. Accordingly, in producing a wavelength conversion sheet through steps (1) to (3), the stress to be generated through the shrinkage of the quantum dot-containing layer tends to more readily propagate to the first quantum dot protective film than to the second quantum dot protective film. Because of this, production of a wavelength conversion sheet through steps (1) to (3) causes the resulting wavelength conversion sheet to tend to undergo the occurrence of curling that forms a convex on the first quantum dot protective film side.

In the method for producing a wavelength conversion sheet in the first embodiment of the present disclosure, the first quantum dot protective film at a time of irradiating with an ultraviolet ray comprises the protective base material for the first barrier layer in addition to the first base material. Accordingly, the method for producing a wavelength conversion sheet in the first embodiment of the present disclosure allows the stress generated through the shrinkage of the quantum dot-containing layer to easily hinder propagates to the first quantum dot protective film side, and the curling of the wavelength conversion sheet can be suppressed.

Furthermore, in the method for producing a wavelength conversion sheet in the first embodiment of the present disclosure, the protective base material for the first barrier layer has been formed to be peelable from the first quantum dot protective film. The protective base material for the first barrier layer can be peeled off at any of various timings after steps 1 to 3. Therefore, the method for producing a wavelength conversion sheet in the first embodiment of the present disclosure can suppress the occurrence of curling in combination with achievement of thinness for the wavelength conversion sheet.

The total thickness of the wavelength conversion sheet after step 4 is preferably 40 µm or more and 140 µm or less, more preferably 50 µm or more and 130 µm or less, and further preferably 55 µm or more and 100 µm or less.

As the total thickness of the first quantum dot protective film is defined as T1 and the total thickness of the second quantum dot protective film is defined as T2, T1 and T2 preferably satisfy a relationship shown below. T1 is a thickness including that of the protective base material for the first barrier layer.

T2 < T1 is preferably satisfied. Satisfying T2 < T1 makes it possible to easily hinder the propagation of stress to the first quantum dot protective film side and to more easily suppress the curling of the wavelength conversion sheet.

T1 is preferably 40 µm or more and 160 µm or less, more preferably 50 µm or more and 140 µm or less, and further preferably 60 µm or more and 120 µm or less. Setting T1 to 40 µm or more makes it possible to more easily suppress the curling of the wavelength conversion sheet. Setting T1 to 160 µm or less makes it possible to easily achieve thinness for the wavelength conversion sheet.

T2 is preferably 8 µm or more and 50 µm or less, more preferably 9 µm or more and 40 µm or less, and further preferably 10 µm or more and 30 µm or less. Setting T2 to 8 µm or more makes it possible to easily allow the wavelength conversion sheet to have improved handleability. Setting T2 to 50 µm or less makes it possible to easily achieve thinness for the wavelength conversion sheet.

The total of T1 and T2 (T1 + T2) is preferably 50 µm or more and 200 µm or less, more preferably 55 µm or more and 180 µm or less, and further preferably 60 µm or more and 150 µm or less. Setting the total to 50 µm or more makes it possible to more easily suppress the curling of the wavelength conversion sheet. Setting the total to 200 µm or less makes it possible to easily achieve thinness for the wavelength conversion sheet.

T1 - T2 is preferably 30 µm or more and 130 µm or less, more preferably 40 µm or more and 120 µm or less, and further preferably 50 µm or more and 110 µm or less. Because setting T1 - T2 within the range prevents T1 and T2 from being excessively large or excessive small, it becomes possible to more easily suppress the curling of the wavelength conversion sheet and to easily achieve thinness for the wavelength conversion sheet.

T1/T2 is preferably 2.0 or more and 12.0 or less, more preferably 2.5 or more and 11.0 or less, and further preferably 3.0 or more and 10.0 or less. Because setting T1/T2 within the range prevents T1 and T2 from being excessively large or excessive small, it becomes possible to more easily suppress the curling of the wavelength conversion sheet and to easily achieve thinness for the wavelength conversion sheet.

When a plurality of upper limit options and a plurality of lower limit options of a numerical value are indicated for a constitutional requirement shown herein, a range given by combining one selected from the upper limit options and one selected from the lower limit options is shown as an embodiment. The description in the present paragraph is one common to the first, second, and third embodiments.

Examples of embodiments of a range of T1 in the first embodiment include 40 µm or more and 160 µm or less, 40 µm or more and 140 µm or less, 40 µm or more and 120 µm or less, 50 µm or more and 160 µm or less, 50 µm or more and 140 µm or less, 50 µm or more and 120 µm or less, 60 µm or more and 160 µm or less, 60 µm or more and 140 µm or less, and 60 µm or more and 120 µm or less.

As the total thickness of base materials among the layers constituting the first protective film is defined as T1' and the total thickness of base materials among the layers constituting the second protective film is defined as T2', T2' < T1' is preferably satisfied. Satisfying the relationship of T2' < T1' makes it possible to more easily suppress the curling.

T1'/T2' is preferably 2.0 or more and 12.0 or less, more preferably 2.5 or more and 11.0 or less, and further preferably 3.0 or more and 10.0 or less. Because setting T1'/T2' within the range prevents T1' and T2' from being excessively large or excessive small, it becomes possible to more easily suppress the curling of the wavelength conversion sheet and to easily achieve thinness for the wavelength conversion sheet.

Examples of base materials to constitute the first protective film include a first base material and a protective base material for the first barrier layer. The first base material and protective base material for the first barrier layer are preferably each a biaxially stretched resin film.

Examples of base materials to constitute the second protective film include a second base material, a second bulking base material, and a protective base material for the second barrier layer. The base material to constitute the second protective film is preferably constituted with one base material of a second base material. The second base material, second bulking base material, and protective base material for the second barrier layer are preferably each a biaxially stretched resin film.

Herein, the thickness of each layer constituting the wavelength conversion sheet is calculated by photographing a cross section using a scanning electron microscope (SEM), measuring the thicknesses at four points from an image of the cross section, and averaging the values at the four points. The description in the present paragraph is one common to the first, second, and third embodiments.

Herein, measurements and evaluations including measurement of curling, measurement of adhesive force, measurement of the thicknesses of layers are carried out in a room atmosphere at a temperature of 23°C ± 5°C and a relative humidity of 40% or more and 65% or less, unless otherwise specified. Furthermore, samples are exposed to that atmosphere for 30 minutes or more and 60 minutes or less before carrying out any of the measurements and evaluations. The description in the present paragraph is one common to the first, second, and third embodiments.

### <Protective film>

In the method for producing a wavelength conversion sheet in the first embodiment of the present disclosure, a first quantum dot protective film and a second quantum dot protective film are used.

Herein, the "first quantum dot protective film" and the "second quantum dot protective film" are occasionally abbreviated as the "first protective film" and the "second protective film", respectively.

### <<First protective film>>

The first protective film at least comprises a first primer layer, a first base material, a first barrier layer, and a protective base material for the first barrier layer. The first protective film may have a layer other than the first primer layer, the first base material, the first barrier layer, and the protective base material for the first barrier layer. Examples of the layer other than the first primer layer, the first base material, the first barrier layer, and the protective base material for the first barrier layer include a first adhesive layer and a first anti-sticking layer.

Examples of the lamination configuration of the first protective film include 1-1 to 1-4 shown below. "/" indicates an interface between adjacent layers.
1-1: first primer layer/first base material/first barrier layer/first adhesive layer/protective base material for first barrier layer
1-2: first primer layer/first barrier layer/first base material/first adhesive layer/protective base material for first barrier layer
1-3: first primer layer/first base material/first barrier layer/first adhesive layer/protective base material for first barrier layer/first anti-sticking layer
1-4: first primer layer/first barrier layer/first base material/first adhesive layer/protective base material for first barrier layer/first anti-sticking layer

In the first quantum dot protective film, the protective base material for the first barrier layer is preferably disposed farther from the first primer layer than the first base material and the first barrier layer. The protective base material for the first barrier layer is preferably formed over the first base material or the first barrier layer with a first adhesive layer having weak adhesion force intervening therebetween.

### <<Second protective film>>

The second protective film comprises at least a second primer layer, a second base material, and a second barrier layer. The second protective film may have a layer other than the second primer layer, the second base material, and the second barrier layer. Examples of the layer other than the second primer layer, the second base material, and the second barrier layer include a second anti-sticking layer. The second protective film may have, for example, a second adhesive layer, a second bulking base material, and a protective base material for the second barrier layer as long as the layers do not impair the effect of the present disclosure.

Examples of the layer configuration of the second protective film include 2-1 to 2-4 shown below. "/" indicates an interface between adjacent layers.
2-1: second primer layer/second base material/second barrier layer
2-2: second primer layer/second barrier layer/second base material
2-3: second primer layer/second base material/second barrier layer/second anti-sticking layer
2-4: second primer layer/second barrier layer/second base material/second anti-sticking layer

The second protective film preferably comprises neither a second bulking base material nor a protective base material for the second barrier layer in view of thinness.

In view of easily achieving thinness for the wavelength conversion sheet, the first protective film and the second protective film are preferably used as the combination of the following (1).
(1) The first protective film comprises a first primer layer, a first base material, a first barrier layer, and a protective base material for the first barrier layer. The second protective film comprises a second primer layer, a second base material, and a second barrier layer, and comprises neither a second bulking base material nor a protective base material for the second barrier layer.

In the wavelength conversion sheet, the first base material, first barrier layer, and first primer layer of the first protective film and the second base material, second barrier layer, and second primer layer of the second protective film may be symmetrically or asymmetrically disposed with respect to the quantum dot-containing layer. In an example in which the lamination configuration of the first protective film is 1-1 and the lamination configuration of the second protective film is 2-1, the first base material, first barrier layer, and first primer layer of the first protective film and the second base material, second barrier layer, and second primer layer of the second protective film are symmetrically disposed with respect to the quantum dot-containing layer. In another example in which the lamination configuration of the first protective film is 1-2 and the lamination configuration of the second protective film is 2-1, the first base material, first barrier layer, and first primer layer of the first protective film and the second base material, second barrier layer, and second primer layer of the second protective film are asymmetrically disposed with respect to the quantum dot-containing layer.

### - Base material -

Hereinafter, the simple expression "the base material" means "any of the first base material and the second base material".

For the base material, a resin film that does not impair a function of the wavelength conversion sheet is preferably used. Examples of the base material include resin films including one or more resins selected from the group consisting of polyester, triacetyl cellulose, cellulose diacetate, cellulose acetate butyrate, polyamide, polyimide, polyethersulfone, polysulfone, polypropylene, polymethylpentene, polyvinyl chloride, polyvinyl acetal, polyether ketone, acrylic, polycarbonate, polyurethane, an amorphous olefin, and the like. Among these resin films, a monoaxially or biaxially stretched resin film is preferable, and a biaxially stretched resin film is more preferable, in view of suppression of curling, mechanical strength, dimensional stability, and heat resistance. The stretched resin film is preferably a polyester film. Examples of the polyester film include a polyethylene terephthalate film and a polyethylene naphthalate film. The description in the present paragraph is one common to the first, second, and third embodiments.

The thickness of the base material is preferably 5 µm or more, more preferably 8 µm or more, and further preferably 10 µm or more. The thickness of the base material is preferably 60 µm or less, more preferably 50 µm or less, and further preferably 30 µm or less. The thickness of the first base material and that of the second base material may be the same or different. The description in the present paragraph is one common to the first, second, and third embodiments.

### - Protective base material for barrier layer -

Hereinafter, the simple expression "the protective base material for the barrier layer" means "any of the protective base material for the first barrier layer and the protective base material for the second barrier layer".

The protective base material for the barrier layer is a base material that is peeled off after the production of the wavelength conversion sheet. The protective base material for the barrier layer has a role of protecting the barrier layer and improving the handleability of the protective film in the production of the wavelength conversion sheet. The protective base material for the barrier layer is preferable in terms of capability of more easily suppressing the curling of the wavelength conversion sheet in combination with achievement of thinness for the wavelength conversion sheet. The description in the present paragraph is one common to the first, second, and third embodiments.

In the method for producing a wavelength conversion sheet in the first embodiment of the present disclosure, the protective base material for the first barrier layer is preferably peeled from the first quantum dot protective film in step 4.

If the second quantum dot protective film further comprises a protective base material for the second barrier layer, the method for producing a wavelength conversion sheet in the first embodiment of the present disclosure preferably comprises a step of peeling the protective base material for the second barrier layer from the second quantum dot protective film after step 3.

For the protective base material for the barrier layer, a resin film that does not impair a function of the wavelength conversion sheet is preferably used. Examples of the protective base material for the barrier layer include resin films including one or more resins selected from the group consisting of polyester, triacetyl cellulose, cellulose diacetate, cellulose acetate butyrate, polyamide, polyimide, polyethersulfone, polysulfone, polypropylene, polymethylpentene, polyvinyl chloride, polyvinyl acetal, polyether ketone, acrylic, polycarbonate, polyurethane, an amorphous olefin, and the like. Among these resin films, a monoaxially or biaxially stretched resin film is preferable, and a biaxially stretched resin film is more preferable, in view of suppression of curling, mechanical strength, dimensional stability, and heat resistance. The stretched resin film is preferably a polyester film. Examples of the polyester film include a polyethylene terephthalate film and a polyethylene naphthalate film. The description in the present paragraph is one common to the first, second, and third embodiments.

The thickness of the protective base material for the barrier layer is preferably 10 µm or more, more preferably 20 µm or more, and further preferably 30 µm or more. Setting the thickness of the protective base material for the barrier layer to 10 µm or more makes it possible to more easily improve the handleability of the wavelength conversion sheet. The thickness of the protective base material for the barrier layer is preferably 150 µm or less, more preferably 100 µm or less, more preferably 75 µm or less, and more preferably 50 µm or less, in view of achieving thinness for the wavelength conversion sheet. The description in the present paragraph is one common to the first, second, and third embodiments.

The thickness of the first base material and the thickness of the protective base material for the first barrier layer preferably satisfy the relationship "thickness of first base material < thickness of protective base material for first barrier layer". The thickness of the second base material and the thickness of the protective base material for the second barrier layer preferably satisfy the relationship "thickness of second base material < thickness of protective base material for second barrier layer". Satisfying the relationships makes it possible to more easily improve the handleability of the protective film in the production of the wavelength conversion sheet in combination with improving the efficiency in forming the barrier layer on the base material. The description in the present paragraph is one common to the first, second, and third embodiments.

### - Bulking base material -

The second protective film may have a second bulking base material. The first protective film preferably comprises no first bulking base material. Hereinafter, the simple expression "the bulking base material" means "any of the first bulking base material and the second bulking base material".

While the protective base material for the barrier layer is a base material that is peeled off after step 3, the bulking base material is a base material that remains as a constituent member of the wavelength conversion sheet even after step 3.

For the bulking base material, a resin film that does not impair a function of the wavelength conversion sheet is preferably used. Examples of the bulking base material include resin films including one or more resins selected from the group consisting of polyester, triacetyl cellulose, cellulose diacetate, cellulose acetate butyrate, polyamide, polyimide, polyethersulfone, polysulfone, polypropylene, polymethylpentene, polyvinyl chloride, polyvinyl acetal, polyether ketone, acrylic, polycarbonate, polyurethane, an amorphous olefin, and the like. Among these resin films, a monoaxially or biaxially stretched resin film is preferable, and a biaxially stretched resin film is more preferable, in view of suppression of curling, mechanical strength, dimensional stability, and heat resistance. The stretched resin film is preferably a polyester film. Examples of the polyester film include a polyethylene terephthalate film and a polyethylene naphthalate film. The description in the present paragraph is one common to the first, second, and third embodiments.

The thickness of the bulking base material is preferably 10 µm or more, more preferably 20 µm or more, and further preferably 30 µm or more. Setting the thickness of the bulking base material to 10 µm or more makes it possible to more easily improve the handleability of the wavelength conversion sheet. In view of thinning the wavelength conversion sheet, the thickness of the bulking base material is preferably 200 µm or less, more preferably 150 µm or less, more preferably 100 µm or less, and more preferably 75 µm or less. The description in the present paragraph is one common to the first, second, and third embodiments.

The thickness of the second base material and the thickness of the second bulking base material preferably satisfy the relationship of "thickness of second base material < thickness of second bulking base material". The thickness of the first base material and the thickness of the first bulking base material preferably satisfy the relationship of "thickness of first base material < thickness of first bulking base material" (however, no first bulking base material is preferably comprised in the first embodiment). Satisfying the relationships makes it possible to more easily improve the stiffness and strength of the wavelength conversion sheet in combination with improving the efficiency in forming the barrier layer on the base material. The description in the present paragraph is one common to the first, second, and third embodiments.

The total light transmittance according to JIS K7361-1: 1997 of the base material, the bulking base material, and the protective base material for the barrier layer is preferably 80% or more, more preferably 85% or more, and further preferably 87% or more. Each of the base material, the bulking base material, and the protective base material for the barrier layer may be subjected to surface treatment or treatment for easy adherence in view of improving the close adhesion. The description in the present paragraph is one common to the first, second, and third embodiments.

### - Adhesive layer -

The protective base material for the first barrier layer and the first base material or first barrier layer are preferably laminated in a peelable manner with the first adhesive layer intervening therebetween.

If the second protective film comprises a second bulking base material, the second bulking base material and the second base material or second barrier layer are preferably laminated through strong adhesion force with the second adhesive layer intervening therebetween. If the second protective film comprises a protective base material for the second barrier layer, the protective base material for the second barrier layer and the second base material or second barrier layer are preferably laminated in a peelable manner with the second adhesive layer intervening therebetween.

Hereinafter, the simple expression "the adhesive layer" means "any of the first adhesive layer and the second adhesive layer".

Embodiments for the adhesive layer that are described below (embodiments of, for example, the adhesive to constitute the adhesive layer and the thickness of the adhesive layer) are ones common to adhesive layers in the first, second, and third embodiments.

Examples of the adhesive to constitute the adhesive layer include moisture-curable adhesives, thermosetting adhesives, ultraviolet-curable adhesives, and heat-sensitive adhesives (for example, hot-melt adhesives), pressure-sensitive adhesives. For those adhesives, versatile ones can be used.

In order to enable the protective base material for the barrier layer and the adhesive layer to be peeled from the base material or the barrier layer, it is preferable to use an adhesive layer with weak adhesion force for the adhesive layer, and it is more preferable to use a pressure-sensitive adhesive layer with weak adhesion force.

In view of keeping good close adhesion for a long period of time, the adhesive layer to laminate the bulking base material is preferably a layer formed of a curable adhesive. Examples of the curable adhesive include moisture-curable adhesives, thermosetting adhesives, and ultraviolet-curable adhesives, and among these thermosetting adhesives and ultraviolet-curable adhesives are preferable, and thermosetting adhesives are more preferable.

Examples of the thermosetting adhesive include versatile one-component curable adhesives and two-component curable adhesives. Among these, a two-component curable polyurethane-based adhesive is preferable. The two-component curable polyurethane-based adhesive is an adhesive including a polyol-based compound and an isocyanate-based compound.

The thickness of the adhesive layer is preferably 2 µm or more and 30 µm or less, more preferably 3 µm or more and 20 µm or less, and further preferably 4 µm or more and 10 µm or less.

### - Barrier layer -

The first protective film comprises a first barrier layer, and the second protective film comprises a second barrier layer.

The first barrier layer is preferably positioned between the first base material and the first primer layer. The second barrier layer is preferably positioned between the second base material and the second primer layer.

The first barrier layer is preferably positioned between the first base material and the protective base material for the first barrier layer. If the second protective film comprises a second bulking base material, the second barrier layer is preferably positioned between the second base material and the second bulking base material. If the second protective film comprises a protective base material for the second barrier layer, the second barrier layer is preferably positioned between the second base material and the protective base material for the second barrier layer.

Hereinafter, the simple expression "the barrier layer" means "any of the first barrier layer and the second barrier layer".

Embodiments for the barrier layer that are described below (embodiments of, for example, the layer configuration of the barrier layer, the material of an inorganic oxide layer, the thickness of an inorganic oxide layer, the material of a coating layer, and the thickness of a coating layer) are ones common to barrier layers in the first, second, and third embodiments.

Examples of the barrier layer include: a single layer of a single type selected from the group consisting of "an inorganic oxide layer formed by vapor-depositing an inorganic oxide," "a coating layer formed by applying a coating agent including a water-soluble polymer such as polyvinyl alcohol" and "a layer including a reaction product of a composition including a metal oxide and a phosphorus compound"; a layer obtained by laminating a single type selected from the above group; and a layer obtained by laminating two or more selected from the above group. Among these, a laminate of an inorganic oxide layer and a coating layer is preferable. That is, the first barrier layer and the second barrier layer preferably include an inorganic oxide layer and a coating layer.

Examples of the layer including a reaction product of a composition including a metal oxide and a phosphorus compound are disclosed in WO 2011/122036.

Hereinafter, embodiments of the inorganic oxide layer and the coating layer will be described.

If the first barrier layer on the first base material comprises an inorganic oxide layer and a coating layer, it is preferable that the first base material, the inorganic oxide layer, and the coating layer are presented in this order.

If the second barrier layer on the second base material comprises an inorganic oxide layer and a coating layer, it is preferable that the second base material, the inorganic oxide layer, and the coating layer are presented in this order.

In view of improving the barrier property, the barrier layer preferably comprises an inorganic oxide layer A, a coating layer A, an inorganic oxide layer B, and a coating layer B in presented order. If the barrier layer on the first base material has that configuration, it is preferable that the first base material, an inorganic oxide layer A, a coating layer A, an inorganic oxide layer B, and a coating layer B are presented in this order. If the barrier layer on the second base material has that configuration, it is preferable that the second base material, an inorganic oxide layer A, a coating layer A, an inorganic oxide layer B, and a coating layer B are presented in this order.

### - Inorganic oxide layer -

Examples of an inorganic oxide for the inorganic oxide layer include one or more selected from aluminum oxide, silicon oxide, and magnesium oxide. Aluminum oxide or silicon oxide is preferable in view of imparting a sufficient barrier property to the wavelength conversion sheet and for production efficiency of the wavelength conversion sheet. Aluminum oxide, which is excellent in transparency, is more preferable.

The inorganic oxide layer can be formed, for example, by a physical vapor deposition method (PVD method) such as a vacuum vapor deposition method, a sputtering method, and an ion plating method, or a chemical vapor deposition method (CVD method) such as a plasma chemical vapor deposition method, a thermochemical vapor deposition method, and a photochemical vapor deposition method. Among these, a vacuum vapor deposition method, which has good productivity due to high vapor deposition rates, is preferable. The PVD method is preferable in that the inorganic oxide layer is less likely to be contaminated with carbon than in the CVD method.

When the inorganic oxide layer includes silicon and oxygen, the content of the total of silicon and oxygen in each layer is preferably 80% by mass or more, more preferably 90% by mass or more, and further preferably 95% by mass or more on a mass basis. Examples of inorganic oxides containing silicon and oxygen include silicon oxide (SiOₓ) such as silicon dioxide.

When the inorganic oxide layer includes aluminum and oxygen, the content of the total of aluminum and oxygen in each layer is preferably 80% by mass or more, more preferably 90% by mass or more, and further preferably 95% by mass or more on a mass basis. Examples of inorganic oxides containing aluminum and oxygen include aluminum oxide (AlOₓ) such as Al₂O₃. As an inorganic oxide containing aluminum and oxygen, a small amount of aluminum hydroxide may be included as long as the aluminum hydroxide does not impair the effect of the present disclosure.

The preferable thickness of the inorganic oxide layer varies depending on the type of the inorganic oxide, and thus cannot be generalized.

When the inorganic oxide layer includes silicon and oxygen, the thickness of the inorganic oxide layer is preferably 15 nm or more, more preferably 20 nm or more, and further preferably 30 nm or more, in view of improving the barrier property.

When the inorganic oxide layer includes silicon and oxygen, the thickness of the inorganic oxide layer is preferably 200 nm or less, more preferably 150 nm or less, and further preferably 100 nm or less. By setting the thickness to 200 nm or less, the occurrence of a scratch and a crack in the inorganic oxide layer can be easily suppressed and the color derived from silicon oxide can be easily suppressed.

When the inorganic oxide layer includes aluminum and oxygen, the thickness of the inorganic oxide layer is preferably 6 nm or more, and more preferably 7 nm or more in order to improve the barrier property.

When the inorganic oxide layer includes aluminum and oxygen, the thickness of the inorganic oxide layer is preferably 25 nm or less, more preferably 20 nm or less, more preferably 15 nm or less, more preferably 12 nm or less, and more preferably 10 nm or less. By setting the thickness to 25 nm or less, the occurrence of a scratch and a crack in the inorganic oxide layer can be easily suppressed.

An anchor layer may be included between the inorganic oxide layer and the first base material or the second base material, for example, in view of improving the close adhesion.

### - Coating layer -

The coating layer preferably includes one or more selected from a water-soluble polymer and a metal alkoxide-based compound. The coating layer includes more preferably one or more selected from the group consisting of a water-soluble polymer, and further preferably one or more selected from the group consisting of a water-soluble polymer and one or more selected from the group consisting of a metal alkoxide-based compound, among a water-soluble polymer and a metal alkoxide-based compound.

When the barrier layer comprises the inorganic oxide layer and the coating layer, it is possible to more easily improve the barrier property of the wavelength conversion sheet.

Examples of the water-soluble polymer include polyvinyl alcohol, polyvinylpyrrolidone, and an ethylene-vinyl alcohol copolymer, and among these, polyvinyl alcohol and an ethylene-vinyl alcohol copolymer are preferable, and polyvinyl alcohol is more preferable, in view of the barrier property. That is, the coating layer includes preferably one or more selected from the group consisting of polyvinyl alcohol and an ethylene-vinyl alcohol copolymer, and more preferably polyvinyl alcohol.

When the coating layer contains a water-soluble polymer and a metal alkoxide-based compound, the content of the water-soluble polymer is preferably 5 parts by mass or more and 500 parts by mass or less, more preferably 7 parts by mass or more and 100 parts by mass or less, and further preferably 8 parts by mass or more and 50 parts by mass or less, per 100 parts by mass in total of the metal alkoxide-based compound.

Examples of the metal alkoxide-based compound include a metal alkoxide, a metal alkoxide hydrolysate, and a metal alkoxide polymer.

The metal alkoxide is a compound represented by the general formula M(OR)ₙ. In the formula, M represents a metal such as Si, Ti, Al, and Zr, and R represents an alkyl group such as a methyl group and an ethyl group. Specific examples of the metal alkoxide include tetramethoxysilane, tetraethoxysilane, and isopropoxyaluminum.

A coating layer can be formed, for example, by applying a coating liquid including a component constituting the coating layer on the inorganic oxide layer and drying the same. The coating liquid may contain an additive such as a silane coupling agent, a curing agent, or a dispersant.

The thickness of the coating layer is preferably 70 nm or more, more preferably 100 nm or more, and further preferably 150 nm or more in order to improve the barrier property.

The thickness of the coating layer is preferably 600 nm or less, more preferably 480 nm or less, more preferably 370 nm or less, and further preferably 300 nm or less. By setting the thickness to 600 nm or less, the wavelength conversion sheet can be thinned and the occurrence of a crack in the coating layer can be easily suppressed.

### - Primer layer -

In view of improving the close adhesion to the quantum dot-containing layer, the first protective film has a first primer layer. In view of improving the close adhesion to the quantum dot-containing layer, the second protective film has a second primer layer.

The first primer layer and the second primer layer are each disposed to be in contact with the quantum dot-containing layer. Accordingly, the first primer layer is preferably positioned as the outermost layer on one side of the first protective film. The second primer layer is preferably positioned as the outermost layer on one side of the second protective film.

Hereinafter, the simple expression "the primer layer" means "any of the first primer layer and the second primer layer".

Embodiments for the primer layer that are described below (embodiments of, for example, the material of the primer layer and the thickness of the primer layer) are ones common to primer layers in the first, second, and third embodiments.

The primer layer preferably includes a resin component. Examples of the resin component include a polyester-based resin, a polyurethane-based resin, and an acrylic-based resin. Among these, a polyurethane-based resin is preferable, and a polyester polyurethane-based resin is more preferable. That is, the primer layer preferably includes a polyurethane-based resin, and more preferably includes a polyester polyurethane-based resin.

The polyurethane-based resin such as the polyester polyurethane-based resin can easily improve the close adhesion to the quantum dot-containing layer. The polyurethane-based resin such as the polyester polyurethane-based resin can also easily relax the stress generated when the quantum dot-containing layer is cured by ionizing radiation or by heat and suppress the propagation of stress to the first protective film and the second protective film.

Examples of the polyurethane-based resin include a reaction product of a one-component or two-component polyurethane-based resin composition obtained by reacting a polyfunctional isocyanate with a hydroxyl group-containing compound. For each of the polyfunctional isocyanate and the hydroxyl group-containing compound, only one type may be used, or a plurality thereof may be used.

Examples of the polyfunctional isocyanate include an aromatic polyisocyanate such as tolylene diisocyanate, diphenylmethane diisocyanate, xylylene diisocyanate, or polymethylene polyphenylene polyisocyanate, and an aliphatic polyisocyanate such as hexamethylene diisocyanate or isophorone diisocyanate.

Examples of the hydroxyl group-containing compound include a polyether polyol, a polyester polyol, a polyester polyurethane polyol, and a polyacrylate polyol. In the present disclosure, a polyester polyol is particularly preferable in view of close adhesion to the quantum dot-containing layer and durability. The reaction product of the polyester polyol and the polyfunctional isocyanate is a polyester polyurethane-based resin.

The content of the polyurethane-based resin is preferably 50% by mass or more, and more preferably 70% by mass or more based on the total amount of the primer layer.

In view of improving the durability, the primer layer is preferably a layer containing a cured product of a curable resin composition.

Examples of the cured product of a curable resin composition include a reaction product of a one-component or two-component polyurethane-based resin composition as described above.

The primer layer may contain a silane coupling agent. In the silane coupling agent, a functional group present at one end of the molecule thereof, such as a chloro group, an alkoxy group, or an acetoxy group, is hydrolyzed to form a silanol group (Si-OH), whereby the resin composition of the primer layer is modified with a covalent bond or the others to form a strong bond. In addition, an organic functional group present at the other end of the silane coupling agent, such as a vinyl group, a methacryloxy group, an amino group, an epoxy group, or a mercapto group, can easily improve the close adhesion between the primer layer and the quantum dot-containing layer.

Examples of the silane coupling agent include γ-chloropropyltrimethoxysilane, vinyltrichlorosilane, vinyltriethoxysilane, vinyl-tris(β-methoxyethoxy)silane, γ-methacryloxypropyltrimethoxysilane, β-(3,4-epoxycyclohexyl)ethyltrimethoxysilane, γ-glycidoxypropyltrimethoxysilane, vinyltriacetoxysilane, γ-mercaptopropyltrimethoxysilane, N-β(aminoethyl)-γ-aminopropyltrimethoxysilane, N-β(aminoethyl)-γ-aminopropylmethyldimethoxysilane, γ-ureidopropyltriethoxysilane, bis(β-hydroxyethyl)-γ-aminopropyltriethoxysilane, and γ-aminopropylsilicone, and one or two or more thereof can be used.

The content of the silane coupling agent is preferably 1% by mass or more, and more preferably 3% by mass or more based on the total amount of the primer layer. When the content of the silane coupling agent is in the above range, the close adhesion between the primer layer and the quantum dot-containing layer can be easily further improved.

For improving the extensibility of the primer layer and suppressing the occurrence of a crack in the primer layer, the content of the silane coupling agent is preferably 30% by mass or less, and more preferably 20% by mass or less based on the total amount of the primer layer.

The primer layer may further include a filler. The filler has the role of adjusting the viscosity or the like of a coating liquid for forming a primer layer to improve the coating suitability or the like. As the filler, for example, calcium carbonate, barium sulfate, alumina white, silica, talc, a glass frit, or a resin powder can be used.

The primer layer may further include an additive such as a stabilizer, a crosslinking agent, a lubricant, or an ultraviolet absorber, as necessary.

For the lower limit, the thickness of the primer layer is preferably 100 nm or more, more preferably 150 nm or more, and further preferably 200 nm or more, and the upper limit is preferably 500 nm or less, more preferably 400 nm or less, and further preferably 300 nm or less.

Setting the thickness to 100 nm or more makes it possible to more easily improve the close adhesion between the primer layer and the quantum dot-containing layer. Setting the thickness to 500 nm or less makes it possible to improve the brightness of a backlight using the wavelength conversion sheet by suppressing absorption of transmitted light by the primer layer.

### - Anti-sticking layer -

The first protective film may have a first anti-sticking layer. The first anti-sticking layer is preferably positioned as the outermost layer on the opposite side of the first protective film from the first primer layer. The second protective film may have a second anti-sticking layer. The second anti-sticking layer is preferably positioned as the outermost layer on the opposite side of the second protective film from the second primer layer. The first and second anti-sticking layers can suppress the occurrence of blocking in the wavelength conversion sheet wound in a roll, and can suppress scratching due to rubbing between the wavelength conversion sheet and another member when the wavelength conversion sheet is incorporated in a liquid crystal display device. The first and second anti-sticking layers each preferably include a binder resin and a filler to prevent sticking. The description in the present paragraph is one common to the first, second, and third embodiments.

### <<Physical properties>>

The first protective film and the second protective film have a value of water vapor transmission rate according to JIS K7129-2:2019 of preferably 0.20 g/m²•day or less and more preferably 0.15 g/m²•day or less. The temperature and relative humidity in measuring the water vapor transmission rate are under conditions differing from any of Conditions 1 to 5 in Table 1 in the JIS. Specifically, a temperature of 40°C and a relative humidity of 100% are employed.

The first protective film and the second protective film preferably have a value of oxygen transmission rate according to JIS K7126-2:2006 of 0.5 cc/m²•day•atm or less. The temperature and relative humidity in measuring the oxygen transmission rate are under conditions differing from those in Table 1 in the JIS. Specifically, a temperature of 23°C and a relative humidity of 90% are employed.

The first protective film and the second protective film have a total light transmittance according to JIS K7361-1:1997 of preferably 80% or more, more preferably 85% or more, and further preferably 87% or more.

The preferable ranges of the water vapor transmission rates, oxygen transmission rates, and total light transmittances of the first protective film and the second protective film are common to the first, second, and third embodiments.

### <Quantum dot-containing layer>

The quantum dot-containing layer includes a quantum dot and a binder resin.

Embodiments for the quantum dot-containing layer that are described below (embodiments of, for example, the material of the quantum dot, the particle size of the quantum dot, the quantum dot content, the material of the binder resin, the type of a curable resin composition, the type of a thiol compound, and the internal diffusion particle content) are ones common to quantum dot-containing layers in the first, second, and third embodiments.

The binder resin preferably includes a cured product of a curable resin composition, and more preferably includes a cured product of an ultraviolet-curable resin composition, in view of improved durability. That is, the quantum dot-containing layer is preferably a layer containing a cured product of a curable resin composition, and more preferably a layer containing a cured product of an ultraviolet-curable resin composition.

The quantum dot-containing layer preferably comprises 50% by mass or more, and more preferably comprises 70% by mass or more of a cured product of a curable resin composition based on the total amount of the components constituting the quantum dot-containing layer, in order to improve the durability.

The quantum dot is a nanometer-sized fine particle of a semiconductor, and exhibits a specific optical or electrical nature due to the quantum confinement effect (quantum size effect), the effect of confining an electron or an exciton in a small nanometer-sized crystal. The quantum dot is also referred to as a semiconductor nanoparticle or a semiconductor nanocrystal.

The quantum dot is not particularly limited as long as it is a nanometer-sized fine particle of a semiconductor and is a material that generates the quantum confinement effect. Examples of the quantum dot include a semiconductor fine particle whose emission color is regulated by its own particle size and a semiconductor fine particle having a dopant.

Quantum dots have different emission colors depending on the particle sizes thereof, and for example, in the case of quantum dots constituted only by a core made of CdSe, the peak wavelengths of fluorescence spectra when the particle sizes are 2.3 nm, 3.0 nm, 3.8 nm, and 4.6 nm are 528 nm, 570 nm, 592 nm, and 637 nm, respectively. That is, the particle size of the quantum dot that emits secondary light having a peak wavelength of 637 nm is 4.6 nm, and the particle size of the quantum dot that emits secondary light having a peak wavelength of 528 nm is 2.3 nm.

The quantum dots preferably include one or more selected from the group consisting of a quantum dot that emits secondary light having a wavelength corresponding to red and a quantum dot that emits secondary light having a wavelength corresponding to green, and more preferably include a quantum dot that emits secondary light having a wavelength corresponding to red and a quantum dot that emits secondary light having a wavelength corresponding to green. The quantum dots may contain a quantum dot other than the quantum dot that emits secondary light having a wavelength corresponding to red or the quantum dot that emits secondary light having a wavelength corresponding to green.

The quantum dot content is appropriately adjusted according to the thickness of the quantum dot-containing layer, the recycling rate of light in the backlight, the target color, or the like. When the thickness of the quantum dot-containing layer is in the range described later, the quantum dot content is preferably 0.010 parts by mass or more and 1.0 part by mass or less per 100 parts by mass of the binder resin of the quantum dot-containing layer.

Specific examples of a material that forms the core of the quantum dot include a semiconductor crystal containing a semiconductor compound or a semiconductor such as a group II-VI semiconductor compound such as MgS, MgSe, MgTe, CaS, CaSe, CaTe, SrS, SrSe, SrTe, BaS, BaSe, BaTe, ZnS, ZnSe, ZnTe, CdS, CdSe, CdTe, HgS, HgSe, and HgTe, a group III-V semiconductor compound such as AlN, AlP, AlAs, AlSb, GaAs, GaP, GaN, GaSb, InN, InAs, InP, InSb, TiN, TiP, TiAs, and TiSb, or a group IV semiconductor such as Si, Ge, and Pb. A semiconductor crystal including a semiconductor compound including three or more elements such as InGaP can also be used.

Further, as a quantum dot composed of a semiconductor fine particle having a dopant, a semiconductor crystal can be used that is formed by doping the above semiconductor compound with a cation of a rare earth metal or a cation of a transition metal, such as Eu³⁺, Tb³⁺, Ag⁺, or Cu⁺.

A semiconductor crystal such as CdS, CdSe, CdTe, InP, or InGaP is suitable as a material that forms the core of the quantum dot in view of ease of preparation, controllability of particle size that can provide light emission in the visible range, and fluorescence quantum yield.

The quantum dot may be made of one semiconductor compound or two or more semiconductor compounds, and for example, may have a core-shell type structure having a core made of a semiconductor compound and a shell made of a semiconductor compound different from that of the core.

When the core-shell type quantum dot is used, a material having a bandgap higher than that of the semiconductor compound that forms the core can be used as the semiconductor that forms the shell so that an exciton is confined in the core, whereby the light emission efficiency of the quantum dot can be enhanced.

Examples of the core-shell structure (core/shell) having such a bandgap magnitude relationship include CdSe/ZnS, CdSe/ZnSe, CdSe/CdS, CdTe/CdS, InP/ZnS, Gap/ZnS, Si/ZnS, InN/GaN, InP/CdSSe, InP/ZnSeTe, InGaP/ZnSe, InGaP/ZnS, Si/AlP, InP/ZnSTe, InGaP/ZnSTe, and InGaP/ZnSSe.

The size of the quantum dot may be appropriately controlled by the material that constitutes the quantum dot so that light having a desired wavelength can be obtained. As the particle size of the quantum dot decreases, the energy bandgap increases. Specifically, as the crystal size decreases, the light emission of the quantum dot shifts to the blue side, that is, to the high energy side. Accordingly, by changing the size of the quantum dot, the emission wavelength thereof can be regulated over the entire spectral wavelength region of the ultraviolet region, the visible region, and the infrared region.

In general, the particle size (diameter) of the quantum dot is preferably in the range of 0.5 nm or more and 20 nm or less and preferably in the range of 1 nm or more and 10 nm or less. A narrower size distribution of the quantum dot can provide a clearer emission color.

The shape of the quantum dot is not particularly limited, and may be, for example, a spherical shape, a rod shape, a disk shape, or any other shape. When the quantum dot is not in a spherical shape, the particle size of the quantum dot can be a value of a truly spherical shape having the same volume.

The quantum dot may be coated with a resin.

The binder resin of the quantum dot-containing layer preferably comprises a cured product of a curable resin composition such as a thermosetting resin composition and an ionizing radiation curable resin composition, in order to improve the durability. The binder resin in the quantum dot-containing layer more preferably includes a cured product of an ultraviolet-curable resin composition.

The thermosetting resin composition is a composition including at least a thermosetting resin, and is a resin composition that is cured by heating. The thermosetting resin composition includes preferably a thiol compound and more preferably a polyfunctional thiol compound, which are described later, in addition to the thermosetting resin.

Examples of the thermosetting resin include an acrylic resin, a urethane resin, a phenol resin, a urea melamine resin, an epoxy resin, an unsaturated polyester resin, and a silicone resin. In the thermosetting resin composition, a curing agent is added, as necessary, to these curable resins.

The ionizing radiation curable resin composition is a composition including a compound having an ionizing radiation curable functional group (hereinafter, also referred to as an "ionizing radiation curable compound"). The ionizing radiation curable resin composition includes preferably a thiol compound and more preferably a polyfunctional thiol compound, which are described later, in addition to the ionizing radiation curable compound. The ionizing radiation curable resin composition is preferably an ultraviolet-curable resin composition.

Examples of the ionizing radiation curable functional group include an ethylenically unsaturated bond group such as a (meth)acryloyl group, a vinyl group, or an allyl group, an epoxy group, and an oxetanyl group, and among these, an ethylenically unsaturated bond group is preferable. Among the ethylenically unsaturated bond groups, a (meth)acryloyl group is preferable. Hereinafter, the ionizing radiation curable compound having a (meth)acryloyl group is referred to as a (meth)acrylate-based compound. That is, the binder resin preferably includes a cured product of a composition including a (meth)acrylate-based compound.

As used herein, "(meth)acrylate" refers to methacrylate and acrylate. As used herein, "ionizing radiation" means an electromagnetic wave or a charged particle beam having an energy quantum that can polymerize or crosslink a molecule among electromagnetic waves or charged particle beams, and usually, an ultraviolet ray (UV) or an electron beam (EB) is used. An electromagnetic wave such as an X-ray or a γ-ray, and a charged particle beam such as an α-ray or an ion beam can also be used.

The ionizing radiation curable compound may be a monofunctional ionizing radiation curable compound having only one such functional group, a polyfunctional ionizing radiation curable compound having two or more such functional groups, or a mixture thereof. Among these, a polyfunctional ionizing radiation curable compound is preferable, and a polyfunctional (meth)acrylate-based compound having two or more (meth)acryloyl groups is more preferable. That is, the binder resin includes preferably a cured product of a polyfunctional ionizing radiation curable compound and more preferably a cured product of a polyfunctional (meth)acrylate-based compound. Further, the binder resin includes preferably a cured product of a composition including a polyfunctional ionizing radiation curable compound and a thiol compound and more preferably a cured product of a composition including a polyfunctional (meth)acrylate-based compound and a thiol compound.

The polyfunctional (meth)acrylate-based compound may have an alkyleneoxy group.

As the alkyleneoxy group, for example, an alkyleneoxy group having 2 or more to 4 or less carbon atoms is preferable, an alkyleneoxy group having 2 or 3 carbon atoms is more preferable, and an alkyleneoxy group having 2 carbon atoms is further preferable.

The polyfunctional (meth)acrylate-based compound having an alkyleneoxy group may be a polyfunctional (meth)acrylate-based compound having a polyalkyleneoxy group including a plurality of alkyleneoxy groups.

When the polyfunctional (meth)acrylate-based compound has an alkyleneoxy group, the number of alkyleneoxy groups in one molecule is preferably 2 or more and 30 or less, and more preferably 2 or more and 20 or less, further preferably 3 or more and 10 or less, and more further preferably 3 or more and 5 or less.

When the polyfunctional (meth)acrylate-based compound has an alkyleneoxy group, the compound preferably has a bisphenol structure. This tends to improve the heat resistance of the cured product. Examples of the bisphenol structure include a bisphenol A structure and a bisphenol F structure, and among these, a bisphenol A structure is preferable.

As the polyfunctional (meth)acrylate-based compound having an alkyleneoxy group, above all, ethoxylated bisphenol A type di(meth)acrylate, propoxylated bisphenol A type di(meth)acrylate, and propoxylated ethoxylated bisphenol A type di(meth)acrylate are preferable, and ethoxylated bisphenol A type di(meth)acrylate is more preferable.

The ionizing radiation curable compound may be a monomer, an oligomer, a low molecular weight polymer, or a mixture thereof.

As described above, the thermosetting resin composition and the ionizing radiation curable resin composition preferably include a thiol compound.

The thiol compound is a compound having one or more units represented by R-SH wherein R is an organic group. As used herein, a compound having one unit represented by R-SH is referred to as a monofunctional thiol compound, and a compound having two or more units represented by R-SH is referred to as a polyfunctional thiol compound.

The thiol compound may be a monofunctional thiol compound, but a polyfunctional thiol compound is preferable in view of improving the strength of the quantum dot-containing layer. Among the polyfunctional thiol compounds, a trifunctional thiol compound or a tetrafunctional thiol compound is more preferable.

The thiol compound causes a thiol-ene reaction of the following equation with a compound having a radically polymerizable functional group in the presence of a radical polymerization initiator. The thiol-ene reaction is preferable in the following: because the thiol-ene reaction can suppress polymerization shrinkage, the stress generated at the time of curing the quantum dot-containing layer is relaxed, and as a result, the interlayer close adhesion of the wavelength conversion sheet is easily further improved. In addition, the cured product obtained by the thiol-ene reaction is preferable in that the heat resistance is easily improved.

The following reaction is an example of a reaction between a monofunctional thiol compound and a compound having one radically polymerizable functional group. It is considered that the reaction product of a polyfunctional thiol compound and a compound having two or more radically polymerizable functional groups easily forms a dendrimer structure. Then, it is considered that when the dendrimer structure is formed, the flexibility of the quantum dot-containing layer increases, and that the quantum dot-containing layer itself easily exerts an excellent stress relaxation property. Examples of the radically polymerizable functional group include an ethylenically unsaturated bond-containing group such as a (meth)acryloyl group, a vinyl group, or an allyl group. 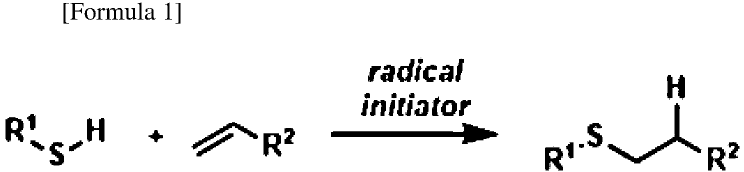 wherein R¹ and R² are organic groups.

Specific examples of the monofunctional thiol compound include hexanethiol, 1-heptanethiol, 1-octanethiol, 1-nonanethiol, 1-decanethiol, 3-mercaptopropionic acid, methyl mercaptopropionate, methoxybutyl mercaptopropionate, octyl mercaptopropionate, tridecyl mercaptopropionate, 2-ethylhexyl-3-mercaptopropionate, and n-octyl-3-mercaptopropionate.

Specific examples of the polyfunctional thiol compound include ethylene glycol bis(3-mercaptopropionate), diethylene glycol bis(3-mercaptopropionate), tetraethylene glycol bis(3-mercaptopropionate), 1,2-propylene glycol bis(3-mercaptopropionate), diethylene glycol bis(3-mercaptobutyrate), 1,4-butanediol bis(3-mercaptopropionate), 1,4-butanediol bis(3-mercaptobutyrate), 1,8-octanediol bis(3-mercaptopropionate), 1,8-octanediol bis(3-mercaptobutyrate), hexanediol bisthioglycolate, trimethylolpropane tris(3-mercaptopropionate), trimethylolpropane tris(3-mercaptobutyrate), trimethylolpropane tris(3-mercaptoisobutyrate), trimethylolpropane tris(2-mercaptoisobutyrate), trimethylolpropane tristhioglycolate, tris-[(3-mercaptopropionyloxy)-ethyl]-isocyanurate, trimethylolethane tris(3-mercaptobutyrate), pentaerythritol tetrakis(3-mercaptopropionate), pentaerythritol tetrakis(3-mercaptobutyrate), pentaerythritol tetrakis(3-mercaptoisobutyrate), pentaerythritol tetrakis(2-mercaptoisobutyrate), dipentaerythritol hexakis(3-mercaptopropionate), dipentaerythritol hexakis(2-mercaptopropionate), dipentaerythritol hexakis(3-mercaptobutyrate), dipentaerythritol hexakis(3-mercaptoisobutyrate), dipentaerythritol hexakis(2-mercaptoisobutyrate), pentaerythritol tetrakisthioglycolate, and dipentaerythritol hexakisthioglycolate.

In the ionizing radiation curable resin composition (or thermosetting resin composition), the mass ratio of the ionizing radiation curable compound (or thermosetting resin) and the thiol compound is preferably 80:20 to 35:65 and more preferably 70:30 to 40:60.

When the ionizing radiation curable compound is an ultraviolet curable compound, the ionizing radiation curable resin composition preferably includes an additive such as a photopolymerization initiator or a photopolymerization accelerator.

The quantum dot-containing layer may include an internal diffusion particle such as an organic particle and an inorganic particle.

The content of the internal diffusion particle is preferably 1 part by mass or more and 40 parts by mass or less and more preferably 3 parts by mass or more and 30 parts by mass or less per 100 parts by mass of the binder resin.

The average particle size of the internal diffusion particle is preferably 1 µm or more and 7 µm or less and more preferably 1 µm or more and 3 µm or less.

The thickness of the quantum dot-containing layer is preferably 10 µm or more and 200 µm or less, more preferably 20 µm or more and 150 µm or less, and further preferably 30 µm or more and 100 µm or less. The method for producing a wavelength conversion sheet in the first embodiment of the present disclosure makes it possible to easily suppress curling even if the thickness of the quantum dot-containing layer is large.

### <Applications>

The wavelength conversion sheet obtained by the production method of the present disclosure can be used, for example, for a surface light source. Examples of the surface light source include a backlight light source of a liquid crystal display device and a backlight light source of an inspection device. That is, the wavelength conversion sheet of the present disclosure can be used as a "wavelength conversion sheet of a backlight light source of a liquid crystal display device", a "wavelength conversion sheet of a backlight light source of an inspection device", or the like. Further, the wavelength conversion sheet obtained by the production method of the present disclosure can also be used as a "wavelength conversion sheet for horticulture". Examples of the wavelength conversion sheet for horticulture include a sheet having the function of converting an ultraviolet ray into a wavelength suitable for plant growth. Examples of the wavelength suitable for plant growth include a wavelength suitable for photosynthesis. The wavelength conversion sheet for horticulture can be installed, for example, on a ceiling or the like of a horticultural facility such as a plastic greenhouse and a glasshouse. The description in the present paragraph is one common to the first, second, and third embodiments.

The present disclosure includes the following <A1> to <A4>.
<A1> A production method comprising the following steps 1 to 3:
   step 1: a step of forming a quantum dot-containing layer on a first primer layer of a first quantum dot protective film comprising at least the first primer layer, a first base material, a first barrier layer, and a protective base material for the first barrier layer by applying a coating liquid for quantum dot-containing layer formation onto the first primer layer, wherein the protective base material for the first barrier layer for use therein has been formed to be peelable from the first quantum dot protective film;
   step 2: a step of obtaining an in-process product of a wavelength conversion sheet by attaching a surface of a second quantum dot protective film comprising at least a second primer layer, a second base material, and a second barrier layer to the quantum dot-containing layer, wherein the surface side attaching to the quantum dot-containing layer is on a second primer layer side of the second quantum dot protective film, and the in-process product comprises the first quantum dot protective film, the quantum dot-containing layer, and the second quantum dot protective film in presented order; and
   step 3: a step of irradiating the quantum dot-containing layer of the in-process product with an ultraviolet ray.
<A2> The method for producing a wavelength conversion sheet according to <A1>, wherein the coating liquid for quantum dot-containing layer formation comprises an ultraviolet-curable resin composition.
<A3> The method for producing a wavelength conversion sheet according to <A1> or <A2>, the production method further comprising the following step 4:
   step 4: a step of peeling the protective base material for the first barrier layer from the first quantum dot protective film.
<A4> The method for producing a wavelength conversion sheet according to any one of <A1> to <A3>, wherein the first barrier layer and the second barrier layer each comprise an inorganic oxide layer and a coating layer.

### [Method for producing wavelength conversion sheet in second embodiment]

The method for producing a wavelength conversion sheet in the second embodiment of the present disclosure comprises the following steps 1 to 4:
step 1: a step of forming a quantum dot-containing layer on a first primer layer of a first quantum dot protective film comprising at least the first primer layer, a first base material, and a first barrier layer by applying a coating liquid for quantum dot-containing layer formation onto the first primer layer;
step 2: a step of irradiating the quantum dot-containing layer with a first ultraviolet ray;
step 3: a step of obtaining an in-process product of a wavelength conversion sheet by attaching a surface of a second quantum dot protective film comprising at least a second primer layer, a second base material, and a second barrier layer to the quantum dot-containing layer, wherein the surface side attaching to the quantum dot-containing layer is on a second primer layer side of the second quantum dot protective film, and the in-process product comprises the first quantum dot protective film, the quantum dot-containing layer, and the second quantum dot protective film in presented order; and
step 4: a step of irradiating the quantum dot-containing layer of the in-process product with a second ultraviolet ray, provided that a relationship of integrated dose of first ultraviolet ray < integrated dose of second ultraviolet ray is satisfied.

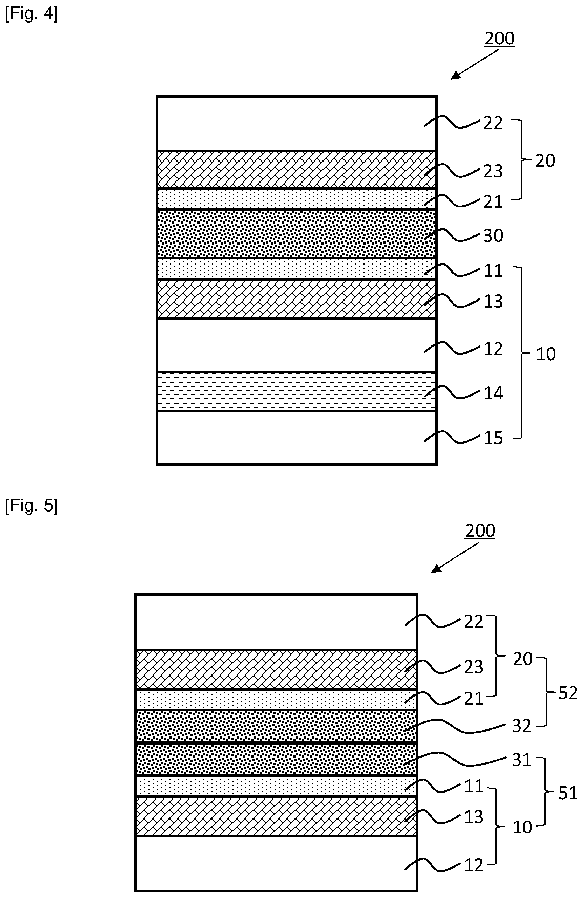

Fig. 4 is a cross-sectional view showing an embodiment of a wavelength conversion sheet 200 obtained by the method for producing a wavelength conversion sheet in the second embodiment of the present disclosure.

The wavelength conversion sheet 200 in Fig. 4 comprises a first quantum dot protective film 10, a quantum dot-containing layer 30, and a second quantum dot protective film 20 in presented order. In Fig. 4, the first quantum dot protective film 10 comprises a first primer layer 11, a first barrier layer 13, and a first base material 12, and further comprises a first adhesive layer 14 and a protective base material 15 for the first barrier layer. In Fig. 4, the second quantum dot protective film 20 comprises a second primer layer 21, a second barrier layer 23, and a second base material 22. In Fig. 4, the first primer layer 11 and the second primer layer 21 are each in contact with the quantum dot-containing layer 30.

Fig. 4 is a schematic cross-sectional view. It follows that Fig. 4 is such a schematization for easy illustration that the scale and others for layers constituting the wavelength conversion sheet 200 are different from actual ones. The same applies to Fig. 3. The wavelength conversion sheet is not limited to the layer configurations in Fig. 4.

Fig. 3 is a diagram for illustrating the state of curling of the wavelength conversion sheet. In Fig. 3, the wavelength conversion sheet has a curled shape with both edges lifted.

The degree of curling of the wavelength conversion sheet 200 is determined through the same procedures as X1 to X4 in the first embodiment.

As the larger of Ave1 and Ave2 determined through X1 to X4 is defined as Ave (max), embodiments of a preferable range of Ave (max) in the second embodiment are the same as the embodiments of a preferable range of Ave (max) in the first embodiment.

The method for producing a wavelength conversion sheet in the second embodiment of the present disclosure needs to comprise steps 1 to 4.

The following explains the steps. Embodiments of materials to be used in steps 1 and 3 will be explained after explanation of step 4.

### <Step 1>

Step 1 is a step of forming a quantum dot-containing layer on a first primer layer of a first quantum dot protective film comprising at least the first primer layer, a first base material, and a first barrier layer by applying a coating liquid for quantum dot-containing layer formation onto the first primer layer.

In step 1, a quantum dot-containing layer is formed on a first primer layer of a first quantum dot protective film by applying a coating liquid for quantum dot-containing layer formation onto the first primer layer. It follows that the first primer layer and the quantum dot-containing layer are in contact with each other.

The coating liquid for quantum dot-containing layer formation includes: materials to constitute the quantum dot-containing layer such as quantum dots and a binder resin; and a diluting solvent as a component to be optionally added. The coating liquid for quantum dot-containing layer formation preferably includes an ultraviolet-curable resin composition as a binder component.

The coating liquid for quantum dot-containing layer formation can be applied onto the primer layer by a versatile application method such as bar coating, die coating, and gravure coating.

### <Step 2>

Step 2 is a step of irradiating the quantum dot-containing layer with a first ultraviolet ray.

In steps 2 and 4, a versatile apparatus can be used to irradiate with an ultraviolet ray. A versatile lamp such as a high-pressure mercury lamp and a UV-LED can be used as a lamp to emit an ultraviolet ray.

In steps 2 and 4, irradiation with an ultraviolet ray is preferably performed in a nitrogen atmosphere.

In step 2, the quantum dot-containing layer side is preferably irradiated with the ultraviolet ray.

In step 2, the integrated dose of the ultraviolet ray is preferably adjusted to prevent the ultraviolet-curable resin composition in the quantum dot-containing layer from completely curing. The integrated dose of the ultraviolet ray in step 2 depends on the thickness of the quantum dot-containing layer and others and thus cannot be definitely specified, but is preferably 10 mJ/cm² or more and 2000 mJ/cm² or less, more preferably 20 mJ/cm² or more and 1500 mJ/cm² or less, and further preferably 30 mJ/cm² or more and 1000 mJ/cm² or less.

### <Step 3>

Step 3 is a step of obtaining an in-process product of a wavelength conversion sheet by attaching a surface of a second quantum dot protective film comprising at least a second primer layer, a second base material, and a second barrier layer to the quantum dot-containing layer, wherein the surface side attaching to the quantum dot-containing layer is on a second primer layer side of the second quantum dot protective film, and the in-process product comprises the first quantum dot protective film, the quantum dot-containing layer, and the second quantum dot protective film in presented order.

In step 3, a surface of a second quantum dot protective film on a second primer layer side is attached to the quantum dot-containing layer. It follows that the second primer layer and the quantum dot-containing layer are in contact with each other.

Attaching in step 3 can be performed by a versatile lamination technique.

A surface of the second quantum dot protective film on the second primer layer side and the quantum dot-containing layer can be attached to each other, for example, by utilizing the tackiness of the uncured ultraviolet-curable resin composition in the quantum dot-containing layer. Accordingly, it is preferable to prevent the ultraviolet-curable resin composition in the quantum dot-containing layer from completely curing during the first ultraviolet-ray irradiation in step 2.

### <Step 4>

Step 4 is a step of irradiating the quantum dot-containing layer of the in-process product with a second ultraviolet ray; provided that a relationship of integrated dose of first ultraviolet ray < integrated dose of second ultraviolet ray needs to be satisfied.

The integrated dose of the ultraviolet ray in step 4 is not particularly limited as long as the relationship of integrated dose of first ultraviolet ray < integrated dose of second ultraviolet ray is satisfied. The integrated dose of the ultraviolet ray in step 4 depends on the thickness of the quantum dot-containing layer and others and thus cannot be definitely specified, but is preferably 100 mJ/cm² or more and 5000 mJ/cm² or less, more preferably 150 mJ/cm² or more and 4000 mJ/cm² or less, and further preferably 200 mJ/cm² or more and 3000 mJ/cm² or less.

Although the first quantum dot protective film side may be irradiated with the ultraviolet ray in step 4, the second quantum dot protective film side is preferably irradiated with the ultraviolet ray.

In the method for producing a wavelength conversion sheet in the second embodiment of the present disclosure, irradiation with an ultraviolet ray is performed in each of step 2 and step 4. It follows that, in the method for producing a wavelength conversion sheet in the second embodiment of the present disclosure, the ultraviolet-curable resin composition in the quantum dot-containing layer is cured in two separate operations. Furthermore, as specified for step 4, the method for producing a wavelength conversion sheet in the second embodiment of the present disclosure involves irradiation with an ultraviolet ray to satisfy the relationship of integrated dose of first ultraviolet ray < integrated dose of second ultraviolet ray.

The method for producing a wavelength conversion sheet in the second embodiment of the present disclosure suppresses the occurrence of curling in the wavelength conversion sheet by irradiating with an ultraviolet ray in two separate operations and satisfying the relationship of integrated dose of first ultraviolet ray < integrated dose of second ultraviolet ray. The following explains the reason why the method for producing a wavelength conversion sheet in the second embodiment of the present disclosure can suppress curling.

Wavelength conversion sheets are conventionally produced through the following steps (1) to (3) (see Examples in PTLs 1 and 2).
Step (1): a step of forming a quantum dot-containing layer on a first primer layer of a first quantum dot protective film comprising at least the first primer layer, a first base material, and a first barrier layer by applying a coating liquid for quantum dot-containing layer formation onto the first primer layer.
Step (2): a step of obtaining an in-process product of a wavelength conversion sheet by attaching a surface of a second quantum dot protective film comprising at least a second primer layer, a second base material, and a second barrier layer to the quantum dot-containing layer, wherein the surface side attaching to the quantum dot-containing layer is on a second primer layer side of the second quantum dot protective film, and the in-process product comprises the first quantum dot protective film, the quantum dot-containing layer, and the second quantum dot protective film in presented order.
Step (3): a step of irradiating the quantum dot-containing layer of the in-process product with an ultraviolet ray.

If a wavelength conversion sheet is to be produced through steps (1) to (3), the coating liquid for quantum dot-containing layer formation more permeates the first primer layer, but less permeates the second primer layer. For this reason, the wavelength conversion sheet produced through steps (1) to (3) tends to satisfy the relationship of adhesive force between second primer layer and quantum dot-containing layer < adhesive force between first primer layer and quantum dot-containing layer.

Further, in producing a wavelength conversion sheet through steps (1) to (3), the curing shrinkage of the quantum dot-containing layer very rapidly progresses during step (3). The very rapid progress of the curing shrinkage of the quantum dot-containing layer tends to result in adhesion failure between the quantum dot-containing layer and the first primer layer and between the quantum dot-containing layer and the second primer layer. Such adhesion failure is more likely to occur between the quantum dot-containing layer and the second primer layer, which are associated with weaker adhesive force. Accordingly, the wavelength conversion sheet produced through steps (1) to (3) tends to have a much larger difference between the adhesive force between the second primer layer and the quantum dot-containing layer and the adhesive force between the first primer layer and the quantum dot-containing layer.

Stress generated through the shrinkage of the quantum dot-containing layer tends to more readily propagate to a direction with stronger adhesive force. Accordingly, in producing a wavelength conversion sheet through steps (1) to (3), the stress to be generated through the shrinkage of the quantum dot-containing layer tends to more readily propagate to the first quantum dot protective film than to the second quantum dot protective film. Because of this, production of a wavelength conversion sheet through steps (1) to (3) causes the resulting wavelength conversion sheet to tend to undergo the occurrence of curling that forms a convex on the first quantum dot protective film side.

In the method for producing a wavelength conversion sheet in the second embodiment of the present disclosure, on the other hand, irradiation with an ultraviolet ray is performed in two separate operations, and hence the stress in the curing shrinkage of the quantum dot-containing layer can be dispersed into two parts. Accordingly, the method for producing a wavelength conversion sheet in the second embodiment of the present disclosure makes it possible to easily suppress the occurrence of adhesion failure between the quantum dot-containing layer and each primer layer during the curing shrinkage of the quantum dot-containing layer. In addition, the method for producing a wavelength conversion sheet in the second embodiment of the present disclosure makes it possible to easily cause reaction on the interface between the second primer layer and the quantum dot-containing layer by satisfying the relationship of integrated dose of first ultraviolet ray < integrated dose of second ultraviolet ray and thus to easily achieve good close adhesion between the second primer layer and the quantum dot-containing layer. If a relationship of integrated dose of first ultraviolet ray ≥ integrated dose of second ultraviolet ray is satisfied, by contrast, the amount of reactive functional groups in the quantum dot-containing layer has already decreased at the time of second ultraviolet-ray irradiation, and hence it is impossible to achieve good close adhesion between the second primer layer and the quantum dot-containing layer.

As explained above, the method for producing a wavelength conversion sheet in the second embodiment of the present disclosure makes it possible to easily give a smaller difference between the adhesive force between the second primer layer and the quantum dot-containing layer and the adhesive force between the first primer layer and the quantum dot-containing layer by irradiating with an ultraviolet ray in two separate operations and satisfying the relationship of integrated dose of first ultraviolet ray < integrated dose of second ultraviolet ray. Accordingly, the method for producing a wavelength conversion sheet in the second embodiment of the present disclosure makes it possible to easily give a smaller difference between the stress that propagates to the second quantum dot protective film and the stress that propagates to the first quantum dot protective film during the curing of the quantum dot-containing layer and to easily suppress curling that occurs in the wavelength conversion sheet.

Integrated dose of second ultraviolet ray / integrated dose of first ultraviolet ray is preferably 2 or more and 30 or less, more preferably 3 or more and 20 or less, and further preferably 4 or more and 10 or less.

Setting the ratio within the range makes it possible to easily give a smaller difference between the adhesive force between the second primer layer and the quantum dot-containing layer and the adhesive force between the first primer layer and the quantum dot-containing layer and thus to more easily suppress curling that occurs in the wavelength conversion sheet.

### <Protective film>

In the method for producing a wavelength conversion sheet in the second embodiment of the present disclosure, a first quantum dot protective film and a second quantum dot protective film are used.

Herein, "the first quantum dot protective film" and "the second quantum dot protective film" are occasionally abbreviated as "the first protective film" and "the second protective film", respectively.

### <<First protective film>>

The first protective film comprises at least a first primer layer, a first base material, and a first barrier layer. The first protective film may have a layer other than the first primer layer, the first base material, and the first barrier layer. Examples of the layer other than the first primer layer, the first base material, and the first barrier layer include a first adhesive layer, a first bulking base material, a protective base material for the first barrier layer, and a first anti-sticking layer.

Examples of the lamination configuration of the first protective film include 1-1 to 1-12 shown below. "/" indicates an interface between adjacent layers.
1-1: first primer layer/first base material/first barrier layer
1-2: first primer layer/first barrier layer/first base material
1-3: first primer layer/first base material/first barrier layer/first adhesive layer/first bulking base material
1-4: first primer layer/first barrier layer/first base material/first adhesive layer/first bulking base material
1-5: first primer layer/first base material/first barrier layer/first adhesive layer/protective base material for first barrier layer
1-6: first primer layer/first barrier layer/first base material/first adhesive layer/protective base material for first barrier layer
1-7: first primer layer/first base material/first barrier layer/first anti-sticking layer
1-8: first primer layer/first barrier layer/first base material/first anti-sticking layer
1-9: first primer layer/first base material/first barrier layer/first adhesive layer/first bulking base material/first anti-sticking layer
1-10: first primer layer/first barrier layer/first base material/first adhesive layer/first bulking base material/first anti-sticking layer
1-11: first primer layer/first base material/first barrier layer/first adhesive layer/protective base material for first barrier layer/first anti-sticking layer
1-12: first primer layer/first barrier layer/first base material/first adhesive layer/protective base material for first barrier layer/first anti-sticking layer

In view of more easily suppressing curling, the first protective film may have a first bulking base material.

In the first protective film, the first bulking base material is preferably disposed farther from the first primer layer than the first base material and the first barrier layer. The first bulking base material is preferably formed over the first base material or the first barrier layer with a first adhesive layer intervening therebetween. Forming the first bulking base material over the first base material or the first barrier layer with a first adhesive layer intervening therebetween allows the first adhesive layer to relax stress in the quantum dot-containing layer, making it possible to more easily suppress curling.

In view of more easily suppressing curling, the first protective film may have a protective base material for the first barrier layer.

In the first protective film, the protective base material for the first barrier layer is preferably disposed farther from the first primer layer than the first base material and the first barrier layer. The protective base material for the first barrier layer is preferably formed over the first base material or the first barrier layer with a first adhesive layer intervening therebetween. The protective base material for the first barrier layer and the first adhesive layer are preferably formed to be peelable from the first base material or the first barrier layer. Forming the protective base material for the first barrier layer over the first base material or the first barrier layer with a first adhesive layer intervening therebetween allows the first adhesive layer to relax stress in the quantum dot-containing layer, making it possible to more easily suppress curling.

### <<Second protective film>>

The second protective film comprises at least a second primer layer, a second base material, and a second barrier layer. The second protective film may have a layer other than the second primer layer, the second base material, and the second barrier layer. Examples of the layer other than the second primer layer, the second base material, and the second barrier layer include a second adhesive layer, a second bulking base material, a protective base material for the second barrier layer, and a second anti-sticking layer.

Examples of the lamination configuration of the second protective film include 2-1 to 2-12 shown below. "/" indicates an interface between adjacent layers.
2-1: second primer layer/second base material/second barrier layer
2-2: second primer layer/second barrier layer/second base material
2-3: second primer layer/second base material/second barrier layer/second adhesive layer/second bulking base material
2-4: second primer layer/second barrier layer/second base material/second adhesive layer/second bulking base material
2-5: second primer layer/second base material/second barrier layer/second adhesive layer/protective base material for second barrier layer
2-6: second primer layer/second barrier layer/second base material/second adhesive layer/protective base material for second barrier layer
2-7: second primer layer/second base material/second barrier layer/second anti-sticking layer
2-8: second primer layer/second barrier layer/second base material/second anti-sticking layer
2-9: second primer layer/second base material/second barrier layer/second adhesive layer/second bulking base material/second anti-sticking layer
2-10: second primer layer/second barrier layer/second base material/second adhesive layer/second bulking base material/second anti-sticking layer
2-11: second primer layer/second base material/second barrier layer/second adhesive layer/protective base material for second barrier layer/second anti-sticking layer
2-12: second primer layer/second barrier layer/second base material/second adhesive layer/protective base material for second barrier layer/second anti-sticking layer

The second protective film preferably comprises neither a second bulking base material nor a protective base material for the second barrier layer in view of thinness.

In the wavelength conversion sheet, the layers constituting the first protective film and the layers constituting the second protective film may be symmetrically or asymmetrically disposed with respect to the quantum dot-containing layer. In an example in which the lamination configuration of the first protective film is the 1-1 and the lamination configuration of the second protective film is the 2-1, the layers constituting the first protective film and the layers constituting the second protective film are symmetrically disposed with respect to the quantum dot-containing layer. In another example in which the lamination configuration of the first protective film is the 1-2 and the lamination configuration of the second protective film is the 2-1, the layers constituting the first protective film and the layers constituting the second protective film are asymmetrically disposed with respect to the quantum dot-containing layer.

In view of easily achieving thinness for the wavelength conversion sheet, the first protective film and the second protective film are preferably used as a combination of (1) or (2) shown below, and more preferably used as the combination of (2).
(1) The first protective film comprises a first primer layer, a first base material, a first barrier layer, and a first bulking base material. The second protective film comprises a second primer layer, a second base material, and a second barrier layer, and comprises neither a second bulking base material nor a protective base material for the second barrier layer.
(2) The first protective film comprises a first primer layer, a first base material, a first barrier layer, and a protective base material for the first barrier layer. The second protective film comprises a second primer layer, a second base material, and a second barrier layer, and comprises neither a second bulking base material nor a protective base material for the second barrier layer.

### - Base material -

Hereinafter, the simple expression "the base material" means "any of the first base material and the second base material".

Examples of embodiments of the material and thickness of the base material in the second embodiment include the embodiments of the material and thickness of the base material in the first embodiment.

### -Bulking base material -

Hereinafter, the simple expression "the bulking base material" means "any of the first bulking base material and the second bulking base material".

While a protective base material for the barrier layer, which is described later, is a base material that is peeled off after step 4, the bulking base material is a base material that remains as a constituent member of the wavelength conversion sheet even after step 4.

Examples of embodiments of the material and thickness of the bulking base material in the second embodiment include the embodiments of the material and thickness of the bulking base material in the first embodiment.

In view of more easily suppressing curling, the first protective film may have a first bulking base material. The second protective film may have a second bulking base material as long as the second bulking base material does not impair the effect of the present disclosure.

### -Protective base material for barrier layer -

Hereinafter, the simple expression "the protective base material for the barrier layer" means "any of the protective base material for the first barrier layer and the protective base material for the second barrier layer".

Examples of embodiments of the role and usage of the protective base material for the barrier layer in the second embodiment include the embodiments of the role and usage of the protective base material for the barrier layer in the first embodiment. Examples of embodiments of the material of the protective base material for the barrier layer and the thickness of the protective base material for the barrier layer in the second embodiment include the embodiments of the material of the protective base material for the barrier layer in the first embodiment.

If the first quantum dot protective film further comprises a protective base material for the first barrier layer, the method for producing a wavelength conversion sheet in the second embodiment of the present disclosure preferably comprises a step of peeling off the protective base material for the first barrier layer after step 4.

If the second quantum dot protective film further comprises a protective base material for the second barrier layer, the method for producing a wavelength conversion sheet in the second embodiment of the present disclosure preferably comprises a step of peeling off the protective base material for the second barrier layer after step 4.

In view of more easily suppressing curling, the first protective film preferably comprises a protective base material for the first barrier layer. The second protective film may have a protective base material for the second barrier layer as long as the protective base material for the second barrier layer does not impair the effect of the present disclosure.

### - Adhesive layer -

If the first protective film comprises a first bulking base material, the first bulking base material and the first base material or first barrier layer are preferably laminated through strong adhesion force with the first adhesive layer intervening therebetween. If the first protective film comprises a protective base material for the first barrier layer, the protective base material for the first barrier layer and the first base material or first barrier layer are preferably laminated in a peelable manner with the first adhesive layer intervening therebetween.

If the second protective film comprises a second bulking base material, the second bulking base material and the second base material or second barrier layer are preferably laminated through strong adhesion force with the second adhesive layer intervening therebetween. If the second protective film comprises a protective base material for the second barrier layer, the protective base material for the second barrier layer and the second base material or second barrier layer are preferably laminated in a peelable manner with the second adhesive layer intervening therebetween.

The definition of being "peelable" and measurement methods for peel strength are the same as the definition and measurement methods described for the first embodiment.

Hereinafter, the simple expression "the adhesive layer" means "any of the first adhesive layer and the second adhesive layer".

Examples of embodiments of the adhesive layer such as the type of the adhesive to constitute the adhesive layer and the thickness of the adhesive layer in the second embodiment include the embodiments of the adhesive layer in the first embodiment.

### - Barrier layer-

The first protective film comprises a first barrier layer, and the second protective film comprises a second barrier layer.

The first barrier layer is preferably positioned between the first base material and the first primer layer. The second barrier layer is preferably positioned between the second base material and the second primer layer.

If the first protective film comprises a first bulking base material, the first barrier layer is preferably positioned between the first base material and the first bulking base material. If the first protective film comprises a protective base material for the first barrier layer, the first barrier layer is preferably positioned between the first base material and the protective base material for the first barrier layer. If the second protective film comprises a second bulking base material, the second barrier layer is preferably positioned between the second base material and the second bulking base material. If the second protective film comprises a protective base material for the second barrier layer, the second barrier layer is preferably positioned between the second base material and the protective base material for the second barrier layer.

Hereinafter, the simple expression "the barrier layer" means "any of the first barrier layer and the second barrier layer".

Examples of embodiments of the barrier layer such as the layer configuration of the barrier layer, the material of an inorganic oxide layer, the thickness of an inorganic oxide layer, the material of a coating layer, and the thickness of a coating layer in the second embodiment include the embodiments of the barrier layer in the first embodiment.

### - Primer layer-

In view of improving the close adhesion to the quantum dot-containing layer, the first protective film comprises a first primer layer. In view of improving the close adhesion to the quantum dot-containing layer, the second protective film comprises a second primer layer.

The first primer layer and the second primer layer are each disposed to be in contact with the quantum dot-containing layer. Accordingly, the first primer layer is preferably positioned as the outermost layer on one side of the first protective film. The second primer layer is preferably positioned as the outermost layer on one side of the second protective film.

Hereinafter, the simple expression "the primer layer" means "any of the first primer layer and the second primer layer".

Examples of embodiments of the primer layer such as the material of the primer layer and the thickness of the primer layer in the second embodiment include the embodiments of the primer layer in the first embodiment.

### - Anti-sticking layer -

The first protective film may have a first anti-sticking layer. The second protective film may have a second anti-sticking layer. Examples of embodiments of the first and second anti-sticking layers in the second embodiment include the embodiments of the first and second anti-sticking layers in the first embodiment.

### <<Physical properties>>

Preferable ranges of the water vapor transmission rates, oxygen transmission rates, and total light transmittances of the first protective film and the second protective film in the second embodiment are the same as the preferable ranges for the first embodiment.

### <Quantum dot-containing layer>

The quantum dot-containing layer includes a quantum dot and a binder resin.

Examples of embodiments of the quantum dot-containing layer such as the material of the quantum dot, the particle size of the quantum dot, the quantum dot content, the material of the binder resin, the type of a curable resin composition, the type of a thiol compound, and the internal diffusion particle content in the second embodiment include the embodiments of the quantum dot-containing layer in the first embodiment.

The thickness of the quantum dot-containing layer is preferably 10 µm or more and 200 µm or less, more preferably 20 µm or more and 150 µm or less, and further preferably 30 µm or more and 100 µm or less. The method for producing a wavelength conversion sheet in the second embodiment of the present disclosure makes it possible to easily suppress curling even if the thickness of the quantum dot-containing layer is large.

### <Applications>

Examples of applications of the wavelength conversion sheet obtained by the production method in the second embodiment of the present disclosure include the applications of the wavelength conversion sheet in the first embodiment.

The present disclosure includes the following <B1> to <B5>.
<B1> A method for producing a wavelength conversion sheet, comprising the following steps 1 to 4:
   step 1: a step of forming a quantum dot-containing layer on a first primer layer of a first quantum dot protective film comprising at least the first primer layer, a first base material, and a first barrier layer by applying a coating liquid for quantum dot-containing layer formation onto the first primer layer;
   step 2: a step of irradiating the quantum dot-containing layer with a first ultraviolet ray;
   step 3: a step of obtaining an in-process product of a wavelength conversion sheet by attaching a surface of a second quantum dot protective film comprising at least a second primer layer, a second base material, and a second barrier layer to the quantum dot-containing layer, wherein the surface side attaching to the quantum dot-containing layer is on a second primer layer side of the second quantum dot protective film, and the in-process product comprises the first quantum dot protective film, the quantum dot-containing layer, and the second quantum dot protective film in presented order; and
   step 4: a step of irradiating the quantum dot-containing layer of the in-process product with a second ultraviolet ray, provided that a relationship of integrated dose of first ultraviolet ray < integrated dose of second ultraviolet ray is satisfied.
<B2> The method for producing a wavelength conversion sheet according to <B1>, wherein the coating liquid for quantum dot-containing layer formation comprises an ultraviolet-curable resin composition.
<B3> The method for producing a wavelength conversion sheet according to <B1> or <B2>, wherein the first quantum dot protective film further comprises a protective base material for the first barrier layer, and the production method comprises a step of peeling off the protective base material for the first barrier layer after step 4.
<B4> The method for producing a wavelength conversion sheet according to any one of <B1> to <B3>, wherein integrated dose of second ultraviolet ray / integrated dose of first ultraviolet ray is 2 or more and 30 or less.
<B5> The method for producing a wavelength conversion sheet according to any one of <B1> to <B4>, wherein the first barrier layer and the second barrier layer each comprise an inorganic oxide layer and a coating layer.

### [Method for producing wavelength conversion sheet in third embodiment]

The method for producing a wavelength conversion sheet in the third embodiment of the present disclosure comprises the following steps 1 to 5:
step 1: a step of obtaining a first laminated body by applying a coating liquid for first quantum dot-containing layer formation onto a first primer layer of a first quantum dot protective film comprising at least the first primer layer, a first base material, and a first barrier layer, wherein the first laminated body comprises a first quantum dot-containing layer on the first primer layer of the first quantum dot protective film;
step 2: a step of irradiating the first quantum dot-containing layer of the first laminated body with an ultraviolet ray;
step 3: a step of obtaining a second laminated body by applying a coating liquid for second quantum dot-containing layer formation onto a second primer layer of a second quantum dot protective film comprising at least the second primer layer, a second base material, and a second barrier layer, wherein the second laminated body comprises a second quantum dot-containing layer on the second primer layer of the second quantum dot protective film;
step 4: a step of irradiating the second quantum dot-containing layer of the second laminated body with an ultraviolet ray; and
step 5: a step of obtaining a wavelength conversion sheet as a laminate of the first laminated body and the second laminated body by attaching a surface of the first laminated body on a first quantum dot-containing layer side and a surface of the second laminated body on a side having the second quantum dot-containing layer to each other.

Fig. 5 is a cross-sectional view showing an embodiment of a wavelength conversion sheet 200 obtained by the method for producing a wavelength conversion sheet in the third embodiment of the present disclosure.

In the wavelength conversion sheet 200 in Fig. 5, a first laminated body 51 and a second laminated body 52 are laminated in such a manner that the first quantum dot-containing layer 31 side of the first laminated body 51 and the second quantum dot-containing layer 32 side of the second laminated body 52 face each other. In Fig. 5, the first laminated body 51 comprises the first quantum dot-containing layer 31 on a first primer layer 11 of a first quantum dot protective film 10. In Fig. 5, the second laminated body 52 comprises the second quantum dot-containing layer 32 on a second primer layer 21 of a first quantum dot protective film 20.

In Fig. 5, the first quantum dot protective film 10 comprises the first primer layer 11, a first barrier layer 13, and a first base material 12. In Fig. 5, the second quantum dot protective film 20 comprises the second primer layer 21, a second barrier layer 23, and a second base material 22.

Fig. 5 is a schematic cross-sectional view. It follows that Fig. 5 is such a schematization for easy illustration that the scale and others for layers constituting the wavelength conversion sheet 200 are different from actual ones. The same applies to Fig. 3. The wavelength conversion sheet is not limited to the layer configurations in Fig. 5.

Fig. 3 is a diagram for illustrating the state of curling of the wavelength conversion sheet. In Fig. 3, the wavelength conversion sheet has a curled shape with both edges lifted.

The degree of curling of the wavelength conversion sheet 200 is determined through the same procedures as X1 to X4 in the first embodiment.

As the larger of Ave1 and Ave2 determined through X1 to X4 is defined as Ave (max), embodiments of a preferable range of Ave (max) in the third embodiment are the same as the embodiments of a preferable range of Ave (max) in the first embodiment.

The method for producing a wavelength conversion sheet in the third embodiment of the present disclosure needs to comprise steps 1 to 5.

The following explains the steps. Embodiments of materials to be used in steps 1 and 3 will be explained after explanation of step 5.

### <Step 1>

Step 1 is a step of obtaining a first laminated body by applying a coating liquid for first quantum dot-containing layer formation onto a first primer layer of a first quantum dot protective film comprising at least the first primer layer, a first base material, and a first barrier layer, wherein the first laminated body comprises a first quantum dot-containing layer on the first primer layer of the first quantum dot protective film.

In step 1, a first quantum dot-containing layer is formed on a first primer layer of a first quantum dot protective film by applying a coating liquid for first quantum dot-containing layer formation onto the first primer layer. It follows that the first primer layer and the first quantum dot-containing layer are in contact with each other.

The coating liquid for first quantum dot-containing layer formation includes: materials to constitute the first quantum dot-containing layer such as quantum dots and a binder resin; and a diluting solvent as a component to be optionally added. The coating liquid for first quantum dot-containing layer formation preferably includes an ultraviolet-curable resin composition as a binder component.

The coating liquid for first quantum dot-containing layer formation can be applied onto the primer layer by a versatile application method such as bar coating, die coating, and gravure coating.

### <Step 2>

Step 2 is a step of irradiating the first quantum dot-containing layer of the first laminated body with an ultraviolet ray.

In steps including steps 2 and 4, a versatile apparatus can be used to irradiate with an ultraviolet ray. A versatile lamp such as a high-pressure mercury lamp and a UV-LED can be used as a lamp to emit an ultraviolet ray.

In steps including steps 2 and 4, irradiation with an ultraviolet ray is preferably performed in a nitrogen atmosphere.

In step 2, the first quantum dot-containing layer side is preferably irradiated with the ultraviolet ray.

In step 2, the ultraviolet-curable resin composition in the first quantum dot-containing layer may be completely cured, but the integrated dose of the ultraviolet ray is preferably adjusted to prevent the ultraviolet-curable resin composition in the first quantum dot-containing layer from completely curing. Preventing the ultraviolet-curable resin composition in the first quantum dot-containing layer from completely curing in step 2 allows the curing shrinkage of the first quantum dot-containing layer to proceed stepwise, and hence makes it possible to more easily suppress the curling of the wavelength conversion sheet. In addition, preventing the ultraviolet-curable resin composition in the first quantum dot-containing layer from completely curing in step 2 makes it possible to easily attach the first quantum dot-containing layer and the second quantum dot-containing layer to each other without an adhesive layer intervening therebetween in step 5.

The integrated dose of the ultraviolet ray in step 2 depends on the thickness of the quantum dot-containing layer and whether the ultraviolet-curable resin composition in the first quantum dot-containing layer is completely cured or not, and thus cannot be definitely specified.

If the ultraviolet-curable resin composition in the first quantum dot-containing layer is prevented from completely curing, the integrated dose of the ultraviolet ray in step 2 is typically 10 mJ/cm² or more and 2000 mJ/cm² or less, preferably 20 mJ/cm² or more and 1500 mJ/cm² or less, and more preferably 30 mJ/cm² or more and 1000 mJ/cm² or less.

### <Step 3>

Step 3 is a step of obtaining a second laminated body by applying a coating liquid for second quantum dot-containing layer formation onto a second primer layer of a second quantum dot protective film comprising at least the second primer layer, a second base material, and a second barrier layer, wherein the second laminated body comprises a second quantum dot-containing layer on the second primer layer of the second quantum dot protective film.

In step 3, a second quantum dot-containing layer is formed on a second primer layer of a second quantum dot protective film by applying a coating liquid for second quantum dot-containing layer formation onto the second primer layer. It follows that the second primer layer and the second quantum dot-containing layer are in contact with each other.

The coating liquid for second quantum dot-containing layer formation includes: materials to constitute the second quantum dot-containing layer such as quantum dots and a binder resin; and a diluting solvent as a component to be optionally added. The coating liquid for second quantum dot-containing layer formation preferably includes an ultraviolet-curable resin composition as a binder component.

The coating liquid for second quantum dot-containing layer formation can be applied onto the primer layer by a versatile application method such as bar coating, die coating, and gravure coating.

### <Step 4>

Step 4 is a step of irradiating the second quantum dot-containing layer of the second laminated body with an ultraviolet ray.

In step 4, the second quantum dot-containing layer side is preferably irradiated with the ultraviolet ray.

In step 4, the ultraviolet-curable resin composition in the second quantum dot-containing layer may be completely cured, but the integrated dose of the ultraviolet ray is preferably adjusted to prevent the ultraviolet-curable resin composition in the second quantum dot-containing layer from completely curing. Preventing the ultraviolet-curable resin composition in the second quantum dot-containing layer from completely curing in step 4 allows the curing shrinkage of the second quantum dot-containing layer to proceed stepwise, and hence makes it possible to more easily suppress the curling of the wavelength conversion sheet. In addition, preventing the ultraviolet-curable resin composition in the second quantum dot-containing layer from completely curing in step 4 makes it possible to easily attach the first quantum dot-containing layer and the second quantum dot-containing layer to each other without an adhesive layer intervening therebetween in step 5.

The integrated dose of the ultraviolet ray in step 4 depends on the thickness of the quantum dot-containing layer and whether the ultraviolet-curable resin composition in the second quantum dot-containing layer is completely cured or not, and thus cannot be definitely specified.

If the ultraviolet-curable resin composition in the second quantum dot-containing layer is prevented from completely curing, the integrated dose of the ultraviolet ray in step 4 is typically 10 mJ/cm² or more and 2000 mJ/cm² or less, preferably 20 mJ/cm² or more and 1500 mJ/cm² or less, and more preferably 30 mJ/cm² or more and 1000 mJ/cm² or less.

### <Step 5>

Step 5 is a step of obtaining a wavelength conversion sheet as a laminate of the first laminated body and the second laminated body by attaching a surface of the first laminated body on a first quantum dot-containing layer side and a surface of the second laminated body on a side having the second quantum dot-containing layer to each other.

Attaching in step 5 can be performed by a versatile lamination technique.

A surface of the first laminated body on the first quantum dot-containing layer side and a surface of the second laminated body on the side having the second quantum dot-containing layer can be attached to each other, for example, by utilizing the tackiness of the uncured ultraviolet-curable resin composition in the first quantum dot-containing layer and/or the tackiness of the uncured ultraviolet-curable resin composition in the second quantum dot-containing layer. If attaching is performed by utilizing the aforementioned tackiness, it is preferable to prevent the ultraviolet-curable resin compositions in the first and second quantum dot-containing layers from completely curing in ultraviolet-ray irradiation in steps 2 and 4.

A surface of the first laminated body on the first quantum dot-containing layer side and a surface of the second laminated body on the side having the second quantum dot-containing layer may be attached together with an adhesive layer intervening therebetween. In view of achieving thinness for the wavelength conversion sheet, attaching by utilizing the tackiness mentioned above is preferable. A versatile adhesive layer can be used for the adhesive layer. If the first laminated body and the second laminated body are attached together with an adhesive layer intervening therebetween, the ultraviolet-curable resin compositions in the first and second quantum dot-containing layers may be completely cured, or not, in ultraviolet-ray irradiation in steps 2 and 4.

The method for producing a wavelength conversion sheet in the third embodiment of the present disclosure may have a step of irradiating the first quantum dot-containing layer and the second quantum dot-containing layer with an ultraviolet ray after laminating the first laminated body and the second laminated body.

In satisfying (1) and/or (2) shown below, additional ultraviolet-ray irradiation is preferably performed in step 5. This procedure allows the curing shrinkage of the first quantum dot-containing layer and/or second quantum dot-containing layer to proceed stepwise, and hence makes it possible to more easily suppress the curling of the wavelength conversion sheet.
(1) In the ultraviolet-ray irradiation in step 2, the ultraviolet-curable resin composition in the first quantum dot-containing layer is prevented from completely curing.
(2) In the ultraviolet-ray irradiation in step 4, the ultraviolet-curable resin composition in the second quantum dot-containing layer is prevented from completely curing.

The integrated dose of the ultraviolet ray in step 5 depends on the thicknesses of the first and second quantum dot-containing layers and whether the ultraviolet-curable resin compositions in the first and second quantum dot-containing layers are completely cured or not, and thus cannot be definitely specified.

If the ultraviolet-curable resin compositions in the first and second quantum dot-containing layers are prevented from completely curing, the integrated dose of the ultraviolet ray in step 5 is typically 100 mJ/cm² or more and 5000 mJ/cm² or less, preferably 150 mJ/cm² or more and 4000 mJ/cm² or less, and more preferably 200 mJ/cm² or more and 3000 mJ/cm² or less.

In step 5, the first quantum dot protective film side may be irradiated with the ultraviolet ray, the second quantum dot protective film side may be irradiated with the ultraviolet ray, and both sides may be irradiated with the ultraviolet ray.

Integrated dose of ultraviolet ray in step 5 / integrated dose of ultraviolet ray in step 2 is preferably 2 or more and 30 or less, more preferably 3 or more and 20 or less, and further preferably 4 or more and 10 or less.

Integrated dose of ultraviolet ray in step 5 / integrated dose of ultraviolet ray in step 4 is preferably 2 or more and 30 or less, more preferably 3 or more and 20 or less, and further preferably 4 or more and 10 or less.

The method for producing a wavelength conversion sheet in the third embodiment of the present disclosure comprises a step of obtaining a first laminated body comprising a first quantum dot-containing layer on a first primer layer of a first quantum dot protective film and a step of obtaining a second laminated body comprising a second quantum dot-containing layer on a second primer layer of a second quantum dot protective film (steps 1, 3). That is, the method for producing a wavelength conversion sheet in the third embodiment of the present disclosure comprises steps of forming a quantum dot-containing layer on each of the first quantum dot protective film and the second quantum dot protective film. Furthermore, the method for producing a wavelength conversion sheet in the third embodiment of the present disclosure involves laminating and integrating the quantum dot-containing layers separately formed. The following explains the reason why the method for producing a wavelength conversion sheet in the third embodiment of the present disclosure can suppress curling.

First, wavelength conversion sheets are conventionally produced through the following steps (1) to (3) (see Examples in PTLs 1 and 2).
Step (1): a step of forming a quantum dot-containing layer on a first primer layer of a first quantum dot protective film comprising at least the first primer layer, a first base material, and a first barrier layer by applying a coating liquid for quantum dot-containing layer formation onto the first primer layer.
Step (2): a step of obtaining an in-process product of a wavelength conversion sheet by attaching a surface of a second quantum dot protective film comprising at least a second primer layer, a second base material, and a second barrier layer to the quantum dot-containing layer, wherein the surface side attaching to the quantum dot-containing layer is on a second primer layer side of the second quantum dot protective film, and the in-process product comprises the first quantum dot protective film, the quantum dot-containing layer, and the second quantum dot protective film in presented order.
Step (3): a step of irradiating the quantum dot-containing layer of the in-process product with an ultraviolet ray.

If a wavelength conversion sheet is to be produced through steps (1) to (3), the coating liquid for quantum dot-containing layer formation more permeates the first primer layer, but less permeates the second primer layer. For this reason, the wavelength conversion sheet produced through steps (1) to (3) tends to satisfy the relationship of adhesive force between second primer layer and quantum dot-containing layer < adhesive force between first primer layer and quantum dot-containing layer.

Further, in producing a wavelength conversion sheet through steps (1) to (3), the curing shrinkage of the quantum dot-containing layer very rapidly progresses during step (3). The very rapid progress of the curing shrinkage of the quantum dot-containing layer tends to result in adhesion failure between the quantum dot-containing layer and the first primer layer and between the quantum dot-containing layer and the second primer layer. Such adhesion failure is more likely to occur between the quantum dot-containing layer and the second primer layer, which are associated with weaker adhesive force. Accordingly, the wavelength conversion sheet produced through steps (1) to (3) tends to have a much larger difference between the adhesive force between the second primer layer and the quantum dot-containing layer and the adhesive force between the first primer layer and the quantum dot-containing layer.

Stress generated through the shrinkage of the quantum dot-containing layer tends to more readily propagate to a direction with stronger adhesive force. Accordingly, in producing a wavelength conversion sheet through steps (1) to (3), the stress to be generated through the shrinkage of the quantum dot-containing layer tends to more readily propagate to the first quantum dot protective film than to the second quantum dot protective film. Because of this, production of a wavelength conversion sheet through steps (1) to (3) causes the resulting wavelength conversion sheet to tend to undergo the occurrence of curling that forms a convex on the first quantum dot protective film side.

On the other hand, the method for producing a wavelength conversion sheet in the third embodiment of the present disclosure comprises steps of forming a quantum dot-containing layer on each of the first quantum dot protective film and the second quantum dot protective film. By virtue of this, the method for producing a wavelength conversion sheet in the third embodiment of the present disclosure allows the adhesive force between the first primer layer and the first quantum dot-containing layer and the adhesive force between the second primer layer and the second quantum dot-containing layer to be substantially the same with ease. For this reason, the method for producing a wavelength conversion sheet in the third embodiment of the present disclosure allows the stress that propagates to the first quantum dot protective film and the stress that propagates to the second quantum dot protective film to be substantially the same with ease in the curing of the quantum dot-containing layer, and thus makes it possible to easily suppress curling that occurs in the wavelength conversion sheet.

### <Protective film>

In the method for producing a wavelength conversion sheet in the third embodiment of the present disclosure, a first quantum dot protective film and a second quantum dot protective film are used.

Herein, "the first quantum dot protective film" and "the second quantum dot protective film" are occasionally abbreviated as "the first protective film" and "the second protective film", respectively.

The first protective film and the second protective film may be different or identical in terms of the types, number, and thicknesses of layers constituting them. Equalizing the types, number, and thicknesses of layers in the first protective film and those in the second protective film is preferable in terms of easily stabilizing the physical properties of the wavelength conversion sheet over time.

### <<First protective film>>

The first protective film comprises at least a first primer layer, a first base material, and a first barrier layer. The first protective film may have a layer other than the first primer layer, the first base material, and the first barrier layer. Examples of the layer other than the first primer layer, the first base material, and the first barrier layer include a first adhesive layer, a first bulking base material, a protective base material for the first barrier layer, and a first anti-sticking layer.

Examples of the lamination configuration of the first protective film in the third embodiment include 1-1 to 1-12 shown as examples for the second embodiment.

In view of more easily suppressing curling, the first protective film may have a first bulking base material.

In the first protective film, the first bulking base material is preferably disposed farther from the first primer layer than the first base material and the first barrier layer. The first bulking base material is preferably formed over the first base material or the first barrier layer with a first adhesive layer intervening therebetween. Forming the first bulking base material over the first base material or the first barrier layer with a first adhesive layer intervening therebetween allows the first adhesive layer to relax stress in the quantum dot-containing layer, making it possible to more easily suppress curling.

In view of more easily suppressing curling, the first protective film may have a protective base material for the first barrier layer.

In the first protective film, the protective base material for the first barrier layer is preferably disposed farther from the first primer layer than the first base material and the first barrier layer. The protective base material for the first barrier layer is preferably formed over the first base material or the first barrier layer with a first adhesive layer intervening therebetween. The protective base material for the first barrier layer and the first adhesive layer are preferably formed to be peelable from the first base material or the first barrier layer. Forming the protective base material for the first barrier layer over the first base material or the first barrier layer with a first adhesive layer intervening therebetween allows the first adhesive layer to relax stress in the quantum dot-containing layer, making it possible to more easily suppress curling.

### <<Second protective film>>

The second protective film comprises at least a second primer layer, a second base material, and a second barrier layer. The second protective film may have a layer other than the second primer layer, the second base material, and the second barrier layer. Examples of the layer other than the second primer layer, the second base material, and the second barrier layer include a second adhesive layer, a second bulking base material, a protective base material for the second barrier layer, and a second anti-sticking layer.

Examples of the lamination configuration of the second protective film in the third embodiment include 2-1 to 2-12 shown as examples for the second embodiment.

As with the case of the second embodiment, in the wavelength conversion sheet in the third embodiment, the layers constituting the first protective film and the layers constituting the second protective film may be symmetrically or asymmetrically disposed with respect to the quantum dot-containing layer.

### - Base material -

Hereinafter, the simple expression "the base material" means "any of the first base material and the second base material".

Examples of embodiments of the material and thickness of the base material in the third embodiment include the embodiments of the material and thickness of the base material in the first embodiment.

### - Bulking base material -

Hereinafter, the simple expression "the bulking base material" means "any of the first bulking base material and the second bulking base material".

While a protective base material for the barrier layer, which is described later, is a base material that is peeled off after step 5, the bulking base material is a base material that remains as a constituent member of the wavelength conversion sheet even after step 5.

Examples of embodiments of the material and thickness of the bulking base material in the third embodiment include the embodiments of the material and thickness of the bulking base material in the first embodiment.

In view of more easily suppressing curling, the first protective film may have a first bulking base material. In view of more easily suppressing curling, the second protective film may have a second bulking base material.

### - Protective base material for barrier layer -

Hereinafter, the simple expression "the protective base material for the barrier layer" means "any of the protective base material for the first barrier layer and the protective base material for the second barrier layer".

Examples of embodiments of the role and usage of the protective base material for the barrier layer in the third embodiment include the embodiments of the role and usage of the protective base material for the barrier layer in the first embodiment. Examples of embodiments of the material of the protective base material for the barrier layer and the thickness of the protective base material for the barrier layer in the third embodiment include the embodiments of the material of the protective base material for the barrier layer in the first embodiment.

If the first quantum dot protective film further comprises a protective base material for the first barrier layer, the method for producing a wavelength conversion sheet in the third embodiment of the present disclosure preferably comprises a step of peeling off the protective base material for the first barrier layer after step 5.

If the second quantum dot protective film further comprises a protective base material for the second barrier layer, the method for producing a wavelength conversion sheet in the third embodiment of the present disclosure preferably comprises a step of peeling off the protective base material for the second barrier layer after step 5.

In view of more easily suppressing curling, the first protective film preferably comprises a protective base material for the first barrier layer. In view of more easily suppressing curling, the second protective film preferably comprises a protective base material for the second barrier layer.

### - Adhesive layer -

If the first protective film comprises a first bulking base material, the first bulking base material and the first base material or first barrier layer are preferably laminated through strong adhesion force with the first adhesive layer intervening therebetween. If the first protective film comprises a protective base material for the first barrier layer, the protective base material for the first barrier layer and the first base material or first barrier layer are preferably laminated in a peelable manner with the first adhesive layer intervening therebetween.

If the second protective film comprises a second bulking base material, the second bulking base material and the second base material or second barrier layer are preferably laminated through strong adhesion force with the second adhesive layer intervening therebetween. If the second protective film comprises a protective base material for the second barrier layer, the protective base material for the second barrier layer and the second base material or second barrier layer are preferably laminated in a peelable manner with the second adhesive layer intervening therebetween.

The definition of being "peelable" and measurement methods for peel strength are the same as the definition and measurement methods described for the first embodiment.

Hereinafter, the simple expression "the adhesive layer" means "any of the first adhesive layer and the second adhesive layer".

Examples of embodiments of the adhesive layer such as the type of the adhesive to constitute the adhesive layer and the thickness of the adhesive layer in the third embodiment include the embodiments of the adhesive layer in the first embodiment.

### - Barrier layer-

The first protective film comprises a first barrier layer, and the second protective film comprises a second barrier layer.

The first barrier layer is preferably positioned between the first base material and the first primer layer. The second barrier layer is preferably positioned between the second base material and the second primer layer.

If the first protective film comprises a first bulking base material, the first barrier layer is preferably positioned between the first base material and the first bulking base material. If the first protective film comprises a protective base material for the first barrier layer, the first barrier layer is preferably positioned between the first base material and the protective base material for the first barrier layer. If the second protective film comprises a second bulking base material, the second barrier layer is preferably positioned between the second base material and the second bulking base material. If the second protective film comprises a protective base material for the second barrier layer, the second barrier layer is preferably positioned between the second base material and the protective base material for the second barrier layer.

Hereinafter, the simple expression "the barrier layer" means "any of the first barrier layer and the second barrier layer".

Examples of embodiments of the barrier layer such as the layer configuration of the barrier layer, the material of an inorganic oxide layer, the thickness of an inorganic oxide layer, the material of a coating layer, and the thickness of a coating layer in the third embodiment include the embodiments of the barrier layer in the first embodiment.

### - Primer layer -

In view of improving the close adhesion to the first quantum dot-containing layer, the first protective film comprises a first primer layer. In view of improving the close adhesion to the second quantum dot-containing layer, the second protective film comprises a second primer layer.

The first primer layer is disposed to be in contact with the first quantum dot-containing layer, and the second primer layer is disposed to be in contact with the second quantum dot-containing layer. Accordingly, the first primer layer is preferably positioned as the outermost layer on one side of the first protective film. The second primer layer is preferably positioned as the outermost layer on one side of the second protective film.

Hereinafter, the simple expression "the primer layer" means "any of the first primer layer and the second primer layer".

Examples of embodiments of the primer layer such as the material of the primer layer and the thickness of the primer layer in the third embodiment include the embodiments of the primer layer in the first embodiment.

### - Anti-sticking layer -

The first protective film may have a first anti-sticking layer. The second protective film may have a second anti-sticking layer. Examples of embodiments of the first and second anti-sticking layers in the third embodiment include the embodiments of the first and second anti-sticking layers in the first embodiment.

### <<Physical properties>>

Preferable ranges of the water vapor transmission rates, oxygen transmission rates, and total light transmittances of the first protective film and the second protective film in the third embodiment are the same as the preferable ranges for the first embodiment.

### <Quantum dot-containing layer>

Hereinafter, the simple expression "the quantum dot-containing layer" means "any of the first quantum dot-containing layer and the second quantum dot-containing layer".

The quantum dot-containing layer includes a quantum dot and a binder resin.

Examples of embodiments of the quantum dot-containing layer such as the material of the quantum dot, the particle size of the quantum dot, the quantum dot content, the material of the binder resin, the type of a curable resin composition, the type of a thiol compound, and the internal diffusion particle content in the third embodiment include the embodiments of the quantum dot-containing layer in the first embodiment.

The thicknesses of the first quantum dot-containing layer and the second quantum dot-containing layer are each preferably 5 µm or more and 100 µm or less, more preferably 10 µm or more and 75 µm or less, and further preferably 15 µm or more and 50 µm or less. The method for producing a wavelength conversion sheet in the third embodiment of the present disclosure makes it possible to easily suppress curling even if the thickness of the quantum dot-containing layer is large.

The thickness of the first quantum dot-containing layer and that of the second quantum dot-containing layer may be different, but are preferably substantially the same in view of more easily suppressing curling. Being substantially the same means that the ratio of thickness of first quantum dot-containing layer / thickness of second quantum dot-containing layer is 0.90 or more and 1.10 or less, and the ratio is preferably 0.95 or more and 1.05 or less, more preferably 0.97 or more and 1.03 or less, and further preferably 0.99 or more and 1.01 or less.

The first quantum dot-containing layer and the second quantum dot-containing layer may be the same or different in terms of composition.

Regarding the binder resin, use of the same binder resin for the first quantum dot-containing layer and the second quantum dot-containing layer is preferable in view of more easily suppressing curling.

Regarding the quantum dots, different quantum dots may be used as the quantum dot in the first quantum dot-containing layer and the quantum dot in the second quantum dot-containing layer. For example, it is acceptable to use a quantum dot that emits secondary light having a wavelength corresponding to red as the quantum dot in the first quantum dot-containing layer and use a quantum dot that emits secondary light having a wavelength corresponding to green as the quantum dot in the second quantum dot-containing layer.

### <Applications>

Examples of applications of the wavelength conversion sheet obtained by the production method in the third embodiment of the present disclosure include the applications of the wavelength conversion sheet in the first embodiment.

The present disclosure includes the following <C1> to <C4>.
<C1> A method for producing a wavelength conversion sheet, comprising the following steps 1 to 5:
   step 1: a step of obtaining a first laminated body by applying a coating liquid for first quantum dot-containing layer formation onto a first primer layer of a first quantum dot protective film comprising at least the first primer layer, a first base material, and a first barrier layer, wherein the first laminated body comprises a first quantum dot-containing layer on the first primer layer of the first quantum dot protective film;
   step 2: a step of irradiating the first quantum dot-containing layer of the first laminated body with an ultraviolet ray;
   step 3: a step of obtaining a second laminated body by applying a coating liquid for second quantum dot-containing layer formation onto a second primer layer of a second quantum dot protective film comprising at least the second primer layer, a second base material, and a second barrier layer, wherein the second laminated body comprises a second quantum dot-containing layer on the second primer layer of the second quantum dot protective film;
   step 4: a step of irradiating the second quantum dot-containing layer of the second laminated body with an ultraviolet ray; and
   step 5: a step of obtaining a wavelength conversion sheet as a laminate of the first laminated body and the second laminated body by attaching a surface of the first laminated body on a first quantum dot-containing layer side and a surface of the second laminated body on a side having the second quantum dot-containing layer to each other.
<C2> The method for producing a wavelength conversion sheet according to <C1>, wherein the coating liquid for first quantum dot-containing layer formation and the coating liquid for second quantum dot-containing layer formation each comprise an ultraviolet-curable resin composition.
<C3> The method for producing a wavelength conversion sheet according to <C1> or <C2>, comprising a step of irradiating the first quantum dot-containing layer and the second quantum dot-containing layer with an ultraviolet ray after laminating the first laminated body and the second laminated body in step 5.
<C4> The method for producing a wavelength conversion sheet according to any one of <C1> to <C3>, wherein the first barrier layer and the second barrier layer each comprise an inorganic oxide layer and a coating layer.

### Examples

Next, the present disclosure will be described in more detail with reference to Examples, but the present disclosure is not limited to these Examples at all. "Parts" and "%" are by mass unless otherwise specified.

### <<Examples and Comparative Examples of first embodiment>>

### 1. Measurements and evaluations

The following measurements and evaluations of the wavelength conversion sheets of Examples and Comparative Examples were carried out. Results thereof are shown in Table 1.

### 1-1. Curling

According to the procedures of X1 to X4 in the text of the present specification, the curling of each of the wavelength conversion sheets of Examples and Comparative Examples was measured. For each of Examples A1 and A2, the curling of the wavelength conversion sheet with the protective base material for the first barrier layer peeled from the first quantum dot protective film was measured. For each of Comparative Examples A2 and A3, the curling of the wavelength conversion sheet with the protective base material for the second barrier layer peeled from the second quantum dot protective film was measured. Because the wavelength conversion sheets of Examples and Comparative Examples curled in such a manner that a convex was formed on the first protective film side, only Ave1 was determined, and Ave1 was used as Ave (max). Based on the values of Ave (max), ranking was performed as follows.
AA: Ave (max) was 5.0 mm or less
A: Ave (max) was more than 5.0 mm and 7.5 mm or less
A⁻: Ave (max) was more than 7.5 mm and 10.0 mm or less
B: Ave (max) was more than 10.0 mm and 15.0 mm or less
C: Ave (max) was more than 15.0 mm

### 1-2. Thinness

A case that the total thickness of a wavelength conversion sheet in the final state was 140 µm or less was rated as "A", and a case that this total thickness was more than 140 µm as "C". For Examples A1 and A2 and Comparative Examples A2 and A3, the total thickness of a wavelength conversion sheet in the final state refers to the total thickness with a pressure-sensitive adhesive layer and a protective base material for the barrier layer peeled off.

### 2. Preparation of quantum dot dispersion liquid

A quantum dot and amino-modified silicone were mixed at the composition ratio shown below in a glove box purged with nitrogen such that the oxygen concentration was 300 ppm or less, and the resulting mixture was stirred using a magnetic stirrer for 4 hours while heated in a water bath at 90°C. Thereafter, the mixture was filtered through a polypropylene filter having a pore size of 0.2 µm to obtain a CdSe/ZnS core-shell type quantum dot dispersion liquid.

| | |
|---|---|
| • Quantum dot | 0.9 parts by mass |
| (Emission peak: 540 nm, serial number: 748056, manufactured by Sigma-Aldrich Corporation) | |
| • Quantum dot | 0.9 parts by mass |
| (Emission peak: 630 nm, serial number: 790206, manufactured by Sigma-Aldrich Corporation) | |
| • Amino-modified silicone | 99 parts by mass |
| (Manufactured by Genesee Polymers Corporation, product number: GP-344, viscosity: 670 mPa•s) | |

### 3. Preparation of wavelength conversion sheet

### [Example A1]

### <First protective film>

A surface of a first base material (biaxially stretched PET film having easy adherence layer on one surface, thickness: 23 µm) on the side without an easy adherence layer was subjected to plasma treatment in a vacuum deposition apparatus, and aluminum oxide was then vapor-deposited thereon in line by a vacuum vapor deposition method to form an inorganic oxide layer A having a thickness of 8 nm. Next, the coating liquid for coating layer formation shown later was applied onto the inorganic oxide layer A by gravure printing, and heat-treated at 180°C for 60 seconds to form a coating layer B having a thickness of 200 nm. Next, aluminum oxide was vapor-deposited on the coating layer B by a vacuum vapor deposition method to form an inorganic oxide layer C having a thickness of 8 nm. Next, the coating liquid for coating layer formation shown later was applied onto the inorganic oxide layer C by gravure printing, and heat-treated at 180°C for 60 seconds to form a coating layer D having a thickness of 230 nm.

Next, a coating liquid for primer layer formation shown later was applied onto the coating layer D by gravure printing, and heat-treated at 80°C for 60 seconds to form a first primer layer having a thickness of 250 nm.

Through the above operations, a laminate A1-1 having the first primer layer, the first barrier layer, and the first base material in presented order was obtained. The first barrier layer has the inorganic oxide layer A, the coating layer B, the inorganic oxide layer C, and the coating layer D in presented order from the first base material side.

Next, a pressure-sensitive adhesive peelable from the first base material was applied onto one surface of a protective base material for the first barrier layer (biaxially stretched PET film, thickness: 75 µm) by gravure printing, and dried to form a peelable first pressure-sensitive adhesive layer having a thickness of 7 µm, thereby obtaining a laminated body A1-2 having the peelable first adhesive layer on the protective base material for the first barrier layer.

Next, the surface of the first pressure-sensitive adhesive layer side of the laminated body A1-2 was superposed on the surface of the first base material side of the laminated body A1-1, and the laminated body A1-1 and the laminated body A1-2 were dry-laminated.

Through the above operations, a first protective film having the first primer layer, the first barrier layer, the first base material, the first pressure-sensitive adhesive layer, and the protective base material for the first barrier layer in presented order for use in Example A1 was obtained. The total thickness of the first protective film, T1, for use in Example A1 was 105.696 µm.

### <Second protective film>

The laminated body A1-1 was used as a second protective film for use in Example A1. The second protective film has a second primer layer, a second barrier layer, and a second base material in presented order. The total thickness of the second protective film, T2, for use in Example A1 was 23.696 µm.

### <Preparation of wavelength conversion sheet>

A coating liquid 1 for a quantum dot-containing layer having the formulation shown later was applied onto the surface of the first primer layer side of the first protective film, and dried to form a quantum dot-containing layer not irradiated with ionizing radiation, thereby obtaining a laminated body A1-3.

Next, the laminated body A1-3 and the second protective film were laminated such that the surface of the side of the quantum dot-containing layer not irradiated with ionizing radiation of the laminated body A1-3 and the surface of the second primer layer side of the second protective film faced each other, and the resultant was then irradiated with an ultraviolet ray to allow the curing of the ionizing radiation curable resin composition of the quantum dot-containing layer to proceed. The thickness of the quantum dot-containing layer is 50 µm. The first protective film side was irradiated with the ultraviolet ray. The integrated dose of the ultraviolet ray was 700 mJ/cm².

Next, a wavelength conversion sheet of Example A1 was obtained by peeling the first pressure-sensitive adhesive layer and the protective base material for the first barrier layer from the first quantum dot protective film. The total thickness of the wavelength conversion sheet of Example A1 was 97.392 µm. The force when the first pressure-sensitive adhesive layer and the protective base material for the first barrier layer were peeled from the first quantum dot protective film was 0.7 N/25 mm.

### <Preparation of coating liquid for coating layer formation>

Tetraethoxysilane was mixed into a solution (pH 2.2) obtained by mixing water, isopropyl alcohol, and 0.5 N hydrochloric acid, while cooling the same to 10°C, to thereby prepare solution A. Separately, polyvinyl alcohol and isopropyl alcohol having a saponification value of 99% or more were mixed to thereby prepare solution B. Solution A and solution B were mixed to prepare a coating liquid for coating layer formation (solid content: 5% by mass). The mass ratio of tetraethoxysilane to polyvinyl alcohol in the coating liquid for coating layer formation is 100:14.

### <Coating liquid for primer layer formation>

| | |
|---|---|
| • Polyester polyol | 50 parts by mass |
| (Hydroxyl value: 62 mgKOH/g, solid content: 20% by mass) | |
| • Silane coupling agent | 1 part by mass |
| (3-Glycidoxypropylmethyldimethoxysilane) | |
| • Silica filler | 1 part by mass |
| (Average particle size 5 µm) | |
| • Curing agent | 1 part by mass |
| (1,6-Hexamethylene diisocyanate, solid content: 35% by mass) | |
| • Solvent | 50 parts by mass |
| (Methyl ethyl ketone) | |

### <Coating liquid 1 for quantum dot-containing layer>

| | |
|---|---|
| • Polyfunctional acrylate-based compound | 58.11 parts by mass |
| (Ethoxylated bisphenol A diacrylate; trade name "ABE-300" of Shin-Nakamura ChemicalCo., Ltd.) | |
| • Polyfunctional thiol compound | 38.74 parts by mass |
| (Pentaerythritol tetrakis(3-mercaptopropionate); trade name "PEMP" of SC Organic Chemical Co., Ltd.) | |
| • Photopolymerization initiator | 0.5 parts by mass |
| (Trade name "Omnirad TPO H" of IGM Resins B.V.) | |
| • Quantum dot dispersion liquid prepared in "2" above | 1.61 parts by mass |
| • Acetic acid | 0.79 parts by mass |
| • Titanium oxide | 0.25 parts by mass |
| (Trade name "Ti-Pure R-706" of The Chemours company; particle size 0.36 µm) | |

### [Example A2]

A wavelength conversion sheet of Example A2 was obtained in the same manner as in Example A1, except that the thickness of the protective base material for the first barrier layer was changed to 50 µm. The total thickness of the first protective film, T1, for use in Example A2 was 80.696 µm. The total thickness of the second protective film, T2, for use in Example A2 was 23.696 µm. The total thickness of the wavelength conversion sheet of Example A2 was 97.392 µm. The force when the first pressure-sensitive adhesive layer and the protective base material for the first barrier layer were peeled from the first quantum dot protective film was 0.7 N/25 mm.

### [Comparative Example A1]

The laminated body A1-1 was used as a first protective film for use in Comparative Example A1. The first protective film has a first primer layer, a first barrier layer, and a first base material in presented order. The laminated body A1-1 was used as a second protective film for use in Comparative Example A1. The second protective film has a second primer layer, a second barrier layer, and a second base material in presented order. The total thickness of the first protective film, T1, and the total thickness of the second protective film, T2, each protective film being for use in Comparative Example A1, were both 23.696 µm.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body A1-4.

Next, the laminated body A1-4 and the second protective film were laminated such that the surface of the side of the quantum dot-containing layer not irradiated with ionizing radiation of the laminated body A1-4 and the surface of the second primer layer side of the second protective film faced each other, and the resultant was then irradiated with an ultraviolet ray to allow the curing of the ionizing radiation curable resin composition of the quantum dot-containing layer to proceed, thereby obtaining a wavelength conversion sheet of Comparative Example A1. The thickness of the quantum dot-containing layer is 50 µm. The first protective film side was irradiated with the ultraviolet ray. The integrated dose of the ultraviolet ray was 700 mJ/cm². The total thickness of the wavelength conversion sheet of Comparative Example A1 was 97.392 µm.

### [Comparative Example A2]

The laminated body A1-1 was used as a first protective film for use in Comparative Example A2. The first protective film has a first primer layer, a first barrier layer, and a first base material in presented order. The first protective film for use in Example A2 was used as a second protective film for use in Comparative Example A2. The second protective film has a second primer layer, a second barrier layer, a second base material, a second pressure-sensitive adhesive layer, and a protective base material for the second barrier layer in presented order. The total thickness of the first protective film, T1, and the total thickness of the second protective film, T2, each protective film being for use in Comparative Example A2, were 23.696 µm and 80.696 µm, respectively.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body A1-5.

Next, the laminated body A1-5 and the second protective film were laminated such that the surface of the side of the quantum dot-containing layer not irradiated with ionizing radiation of the laminated body A1-5 and the surface of the second primer layer side of the second protective film faced each other, and the resultant was then irradiated with an ultraviolet ray to allow the curing of the ionizing radiation curable resin composition of the quantum dot-containing layer to proceed. The thickness of the quantum dot-containing layer is 50 µm. The first protective film side was irradiated with the ultraviolet ray. The integrated dose of the ultraviolet ray was 700 mJ/cm².

Next, a wavelength conversion sheet of Comparative Example A2 was obtained by peeling the second pressure-sensitive adhesive layer and the protective base material for the second barrier layer from the second quantum dot protective film. The total thickness of the wavelength conversion sheet of Comparative Example A2 was 97.392 µm. The force when the second pressure-sensitive adhesive layer and the protective base material for the second barrier layer were peeled from the second quantum dot protective film was 0.7 N/25 mm.

### [Comparative Example A3]

The laminated body A1-1 was used as a first protective film for use in Comparative Example A3. The first protective film has a first primer layer, a first barrier layer, and a first base material in presented order. The first protective film for use in Example A1 was used as a second protective film for use in Comparative Example A3. The second protective film has a second primer layer, a second barrier layer, a second base material, a second pressure-sensitive adhesive layer, and a protective base material for the second barrier layer in presented order. The total thickness of the first protective film, T1, and the total thickness of the second protective film, T2, each protective film being for use in Comparative Example A3, were 23.696 µm and 105.696 µm, respectively.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body A1-6.

Next, the laminated body A1-6 and the second protective film were laminated such that the surface of the side of the quantum dot-containing layer not irradiated with ionizing radiation of the laminated body A1-6 and the surface of the second primer layer side of the second protective film faced each other, and the resultant was then irradiated with an ultraviolet ray to allow the curing of the ionizing radiation curable resin composition of the quantum dot-containing layer to proceed. The thickness of the quantum dot-containing layer is 50 µm. The first protective film side was irradiated with the ultraviolet ray. The integrated dose of the ultraviolet ray was 700 mJ/cm².

Next, a wavelength conversion sheet of Comparative Example A3 was obtained by peeling the second pressure-sensitive adhesive layer and the protective base material for the second barrier layer from the second quantum dot protective film. The total thickness of the wavelength conversion sheet of Comparative Example A3 was 97.392 µm. The force when the second pressure-sensitive adhesive layer and the protective base material for the second barrier layer were peeled from the second quantum dot protective film was 0.7 N/25 mm.

### [Example A3]

A wavelength conversion sheet of Example A3 was obtained in the same manner as in Example A1, except that the coating liquid 1 for a quantum dot-containing layer was changed to a coating liquid 2 for a quantum dot-containing layer shown later.

### <Coating liquid 2 for quantum dot-containing layer>

| | |
|---|---|
| • Polyfunctional acrylate-based compound | 58.11 parts by mass |
| (Ethoxylated bisphenol A diacrylate; trade name "ABE-300" of Shin-Nakamura Chemical Co., Ltd.) | |
| • Photopolymerization initiator | 3.0 parts by mass |
| (Trade name "Omnirad TPO H" of IGM Resins B.V.) | |
| • Quantum dot dispersion liquid prepared in "2" above | 1.61 parts by mass |
| • Acetic acid | 0.79 parts by mass |
| • Titanium oxide | 0.25 parts by mass |
| (Trade name "Ti-Pure R-706" of The Chemours company; particle size 0.36 µm) | |

### [Comparative Example A4]

A wavelength conversion sheet of Comparative Example A4 was obtained in the same manner as in Comparative Example A1, except that the coating liquid 1 for a quantum dot-containing layer was changed to the above coating liquid 2 for a quantum dot-containing layer.

### [Example A4]

### <First protective film>

The first protective film for use in Example A1 was provided as a first protective film for use in Example A4.

### <Second protective film>

An inorganic oxide layer A, a coating layer B, an inorganic oxide layer C, and a coating layer D were formed over a surface of a second base material (biaxially stretched PET film having easy adherence layer on one surface, thickness: 23 µm) on the side without an easy adherence layer in the same manner as for the laminated body A1-1.

Next, the above coating liquid for primer layer formation was applied onto the surface of the easy adherence layer side of the second base material by gravure printing, and heat-treated at 80°C for 60 seconds to form a second primer layer having a thickness of 250 nm.

Through the above operations, a laminated body A1-7 having a second primer layer, a second base material, and a second barrier layer in presented order was obtained. The second barrier layer has the inorganic oxide layer A, the coating layer B, the inorganic oxide layer C, and the coating layer D in presented order from the second base material side. The laminated body A1-7 was used as a second protective film for use in Example A4.

The total thickness of the second protective film, T2, for use in Example A4, was 23.696 µm.

### <Preparation of wavelength conversion sheet>

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body A1-8.

Next, the laminated body A1-8 and the second protective film were laminated such that the surface of the side of the quantum dot-containing layer not irradiated with ionizing radiation of the laminated body A1-8 and the surface of the second primer layer side of the second protective film faced each other, and the resultant was then irradiated with an ultraviolet ray to allow the curing of the ionizing radiation curable resin composition of the quantum dot-containing layer to proceed. The thickness of the quantum dot-containing layer is 50 µm. The first protective film side was irradiated with the ultraviolet ray. The integrated dose of the ultraviolet ray was 700 mJ/cm².

Next, a wavelength conversion sheet of Example A4 was obtained by peeling the first pressure-sensitive adhesive layer and the protective base material for the first barrier layer from the first quantum dot protective film. The total thickness of the wavelength conversion sheet of Example A4 was 97.392 µm. The force when the first pressure-sensitive adhesive layer and the protective base material for the first barrier layer were peeled from the first quantum dot protective film was 0.7 N/25 mm.

In the wavelength conversion sheet of Example A4, the first base material, first barrier layer, and first primer layer of the first protective film and the second base material, second barrier layer, and second primer layer of the second protective film are asymmetrically disposed with respect to the quantum dot-containing layer.

The wavelength conversion sheet of Example A4 and the wavelength conversion sheet of Example A1 are different in layer configuration (the second protective film of Example A4 has a second primer layer, a second base material, and a second barrier layer in presented order; on the other hand, the second protective film of Example A1 has a second primer layer, a second barrier layer, and a second base material in presented order).

**[Table 1]**

| | | Coating liquid for quantum dot-containing layer | Thickness (µm) | | | Curling | | Thinness |
|---|---|---|---|---|---|---|---|---|
| | | | T1 | T2 | T3 | Ave(Max) (mm) | Rank | |
| Example | A1 | 1 | 105.696 | 23.696 | 50 | 5.0 | AA | A |
| | A2 | 1 | 80.696 | 23.696 | 50 | 7.0 | A | A |
| | A3 | 2 | 105.696 | 23.696 | 50 | 6.0 | A | A |
| | A4 | 1 | 105.696 | 23.696 | 50 | 5.0 | AA | A |
| Comparative Example | A1 | 1 | 23.696 | 23.696 | 50 | 16.0 | C | A |
| | A2 | 1 | 23.696 | 80.696 | 50 | 15.0 | C | A |
| | A3 | 1 | 23.696 | 105.696 | 50 | 15.0 | C | A |
| | A4 | 2 | 23.696 | 23.696 | 50 | 17.0 | C | A |

As demonstrated in Table 1, it can be confirmed that the production methods of Examples of the first embodiment for a wavelength conversion sheet are capable of suppressing the occurrence of curling in combination with achievement of thinness for the wavelength conversion sheet.

### <<Examples and Comparative Examples of second embodiment>>

### 4. Measurements and evaluations

The following measurements and evaluations of the wavelength conversion sheets of Examples and Comparative Examples were carried out. Results thereof are shown in Table 2.

### 4-1. Curling

According to the procedures of X1 to X4 in the text of the present specification, the curling of each of the wavelength conversion sheets of Examples and Comparative Examples was measured. Because the wavelength conversion sheets of Examples and Comparative Examples curled in such a manner that a convex was formed on the first protective film side, only Ave1 was determined, and Ave1 was used as Ave (max). Based on the values of Ave (max), ranking was performed as follows.
AA: Ave (max) was 5.0 mm or less
A: Ave (max) was more than 5.0 mm and 7.5 mm or less
A⁻: Ave (max) was more than 7.5 mm and 10.0 mm or less
B: Ave (max) was more than 10.0 mm and 15.0 mm or less
C: Ave (max) was more than 15.0 mm

### 5. Preparation of quantum dot dispersion liquid

A quantum dot dispersion liquid was prepared in the same manner as in "2. Preparation of quantum dot dispersion liquid" for Examples of the first embodiment.

### 6. Preparation of wavelength conversion sheet

### [Example B1]

### <First protective film>

A surface of a first base material (biaxially stretched PET film having easy adherence layer on one surface, thickness: 12 µm, "EMBLET (registered trademark) PTM" from UNITIKA LTD.) on the side without an easy adherence layer was subjected to plasma treatment in a vacuum deposition apparatus, and aluminum oxide was then vapor-deposited thereon in line by a vacuum vapor deposition method to form an inorganic oxide layer A having a thickness of 8 nm. Next, the coating liquid for coating layer formation shown later was applied onto the inorganic oxide layer A by gravure printing, and heat-treated at 180°C for 60 seconds to form a coating layer B having a thickness of 200 nm. Next, aluminum oxide was vapor-deposited on the coating layer B by a vacuum vapor deposition method to form an inorganic oxide layer C having a thickness of 8 nm. Next, the coating liquid for coating layer formation shown later was applied onto the inorganic oxide layer C by gravure printing, and heat-treated at 180°C for 60 seconds to form a coating layer D having a thickness of 230 nm.

Next, a coating liquid for primer layer formation shown later was applied onto the coating layer D by gravure printing, and heat-treated at 80°C for 60 seconds to form a first primer layer having a thickness of 250 nm.

Through the above operations, a laminated body B1-1 having the first primer layer, the first barrier layer, and the first base material in presented order was obtained. The first barrier layer has the inorganic oxide layer A, the coating layer B, the inorganic oxide layer C, and the coating layer D in presented order from the first base material side. Through the above operations, a first protective film having the first primer layer, the first barrier layer, and the first base material in presented order for use in Example B1 was obtained. The total thickness of the first protective film, T1, for use in Example B1 was 12.696 µm.

### <Second protective film>

The laminated body B1-1 was used as a second protective film for use in Example B1. The second protective film has a second primer layer, a second barrier layer, and a second base material in presented order. The total thickness of the second protective film, T2, for use in Example B1 was 12.696 µm.

### <Preparation of wavelength conversion sheet>

A coating liquid 1 for a quantum dot-containing layer having the formulation shown later was applied onto the surface of the first primer layer side of the first protective film, dried, and then irradiated with an ultraviolet ray to form a quantum dot-containing layer, thereby obtaining a laminated body B1-2 having the quantum dot-containing layer on the first primer layer of the first protective film. The quantum dot-containing layer side was irradiated with the first ultraviolet ray. The integrated dose of the first ultraviolet ray was 100 mJ/cm².

Next, the laminated body B1-2 and the second protective film were laminated such that the surface of the quantum dot-containing layer side of the laminated body B1-2 and the surface of the second primer layer side of the second protective film faced each other, and the resultant was then irradiated with an ultraviolet ray, thereby obtaining a wavelength conversion sheet of Example B1. The thickness of the quantum dot-containing layer, T3, is 50 µm. The second protective film side was irradiated with the second ultraviolet ray. The integrated dose of the second ultraviolet ray was 600 mJ/cm².

### <Preparation of coating liquid for coating layer formation>

Prepared was a coating liquid for coating layer formation the same as that for Examples of the first embodiment.

### <Coating liquid for primer layer formation>

Prepared was a coating liquid for primer layer formation the same as the coating liquid 1 for primer layer formation for Examples of the first embodiment.

### <Coating liquid 1 for quantum dot-containing layer>

Prepared was a coating liquid 1 for a quantum dot-containing layer the same as that for Examples of the first embodiment.

### [Example B2]

A wavelength conversion sheet of Example B2 was obtained in the same manner as in Example B1, except that the thickness of the first base material was changed to 23 µm and the thickness of the quantum dot-containing layer, T3, was changed to 70 µm. The total thickness of the first protective film, T1, for use in Example B2 was 23.696 µm. The total thickness of the second protective film, T2, for use in Example B2 was 23.696 µm.

### [Comparative Example B1]

A wavelength conversion sheet of Comparative Example B1 was obtained in the same manner as in Example B1, except that, in Example B1, the irradiation with the first ultraviolet ray was not performed and the integrated dose in the second ultraviolet-ray irradiation was changed to a value in Table 2.

### [Comparative Example B2]

A wavelength conversion sheet of Comparative Example B2 was obtained in the same manner as in Example B1, except that, in Example B1, the irradiation with the first ultraviolet ray was not performed and the integrated dose in the second ultraviolet-ray irradiation was changed to a value in Table 2.

### [Example B3]

A wavelength conversion sheet of Example B3 was obtained in the same manner as in Example B1, except that the coating liquid 1 for a quantum dot-containing layer was changed to the following coating liquid 2 for a quantum dot-containing layer.

### <Coating liquid 2 for quantum dot-containing layer>

Prepared was a coating liquid 2 for a quantum dot-containing layer the same as that for Examples of the first embodiment.

### [Comparative Example B3]

A wavelength conversion sheet of Comparative Example B3 was obtained in the same manner as in Comparative Example B1, except that the coating liquid 1 for a quantum dot-containing layer was changed to the above coating liquid 2 for a quantum dot-containing layer.

### [Example B4]

### <First protective film>

The laminated body B1-1 was used as a first protective film for use in Example B4. The first protective film has a first primer layer, a first barrier layer, and a first base material in presented order.

### <Second protective film>

An inorganic oxide layer A, a coating layer B, an inorganic oxide layer C, and a coating layer D were formed over a surface of a second base material (biaxially stretched PET film having easy adherence layer on one surface, thickness: 12 µm) on the side without an easy adherence layer in the same manner as for the laminated body B1-1.

Next, the above coating liquid for primer layer formation was applied onto the surface of the easy adherence layer side of the second base material by gravure printing, and heat-treated at 80°C for 60 seconds to form a second primer layer having a thickness of 250 nm.

Through the above operations, a laminated body B1-3 having the second primer layer, the second base material, and the second barrier layer in presented order was obtained. The second barrier layer has the inorganic oxide layer A, the coating layer B, the inorganic oxide layer C, and the coating layer D in presented order from the second base material side. The laminated body B1-3 was used as a second protective film for use in Example B4.

The total thickness of the first protective film, T1, and the total thickness of the second protective film, T2, each protective film being for use in Example B4, were both 12.696 µm.

### <Preparation of wavelength conversion sheet>

A coating liquid 1 for a quantum dot-containing layer having the above formulation was applied onto the surface of the first primer layer side of the first protective film, dried, and then irradiated with an ultraviolet ray to form a quantum dot-containing layer, thereby obtaining a laminated body B1-4 having the quantum dot-containing layer on the first primer layer of the first protective film. The quantum dot-containing layer side was irradiated with the first ultraviolet ray. The integrated dose of the first ultraviolet ray was 100 mJ/cm².

Next, the laminated body B1-4 and the second protective film were laminated such that the surface of the quantum dot-containing layer side of the laminated body B1-4 and the surface of the second primer layer side of the second protective film faced each other, and the resultant was then irradiated with an ultraviolet ray, thereby obtaining a wavelength conversion sheet of Example B4. The thickness of the quantum dot-containing layer, T3, is 50 µm. The second protective film side was irradiated with the second ultraviolet ray. The integrated dose of the second ultraviolet ray was 600 mJ/cm². In the wavelength conversion sheet of Example B4, the layers constituting the first protective film and the layers constituting the second protective film are asymmetrically disposed with respect to the quantum dot-containing layer.

The wavelength conversion sheet of Example B4 and the wavelength conversion sheet of Example B1 are different in layer configuration of the second protective film (the second protective film of Example B4 has a second primer layer, a second base material, and a second barrier layer in presented order; on the other hand, the second protective film of Example B1 has a second primer layer, a second barrier layer, and a second base material in presented order).

**[Table 2]**

| | | Coating liquid for quantum dot-containing layer | Integrated dose (mJ/cm²) | | Thickness (µm) | | | Curling | |
|---|---|---|---|---|---|---|---|---|---|
| | | | First | Second | T1 | T2 | T3 | Ave(Max) (mm) | Rank |
| Example | B1 | 1 | 100 | 600 | 12.696 | 12.696 | 50 | 8.0 | A⁻ |
| | B2 | 1 | 100 | 600 | 23.696 | 23.696 | 70 | 5.0 | AA |
| | B3 | 2 | 100 | 600 | 12.696 | 12.696 | 50 | 8.5 | A⁻ |
| | B4 | 1 | 100 | 600 | 12.696 | 12.696 | 50 | 8.0 | A⁻ |
| Comparative Example | B1 | 1 | - | 700 | 12.696 | 12.696 | 50 | 18.0 | C |
| | B2 | 1 | - | 700 | 23.696 | 23.696 | 70 | 16.0 | C |
| | B3 | 2 | - | 700 | 12.696 | 12.696 | 50 | 18.0 | C |

As demonstrated in Table 2, it can be confirmed that the production methods of Examples of the second embodiment for a wavelength conversion sheet are capable of suppressing the occurrence of curling.

### <<Examples and Comparative Examples of third embodiment>>

### 7. Measurements and evaluations

The following measurements and evaluations of the wavelength conversion sheets of Examples and Comparative Examples were carried out. Results thereof are shown in Table 3.

### 7-1. Curling

According to the procedures of X1 to X4 in the text of the present specification, the curling of each of the wavelength conversion sheets of Examples and Comparative Examples was measured. Because the wavelength conversion sheets of Examples and Comparative Examples curled in such a manner that a convex was formed on the first protective film side, only Ave1 was determined, and Ave1 was used as Ave (max). Based on the values of Ave (max), ranking was performed as follows.
AA: Ave (max) was 5.0 mm or less
A: Ave (max) was more than 5.0 mm and 7.5 mm or less
A⁻: Ave (max) was more than 7.5 mm and 10.0 mm or less
B: Ave (max) was more than 10.0 mm and 15.0 mm or less
C: Ave (max) was more than 15.0 mm

### 8. Preparation of quantum dot dispersion liquid

A quantum dot dispersion liquid was prepared in the same manner as in "2. Preparation of quantum dot dispersion liquid" for Examples of the first embodiment.

### 9. Preparation of wavelength conversion sheet

### [Example C1]

### <First protective film>

A surface of a first base material (biaxially stretched PET film having easy adherence layer on one surface, thickness: 12 µm, "EMBLET (registered trademark) PTM" from UNITIKA LTD.) on the side without an easy adherence layer was subjected to plasma treatment in a vacuum deposition apparatus, and aluminum oxide was then vapor-deposited thereon in line by a vacuum vapor deposition method to form an inorganic oxide layer A having a thickness of 8 nm. Next, a coating liquid for coating layer formation shown later was applied onto the inorganic oxide layer A by gravure printing, and heat-treated at 180°C for 60 seconds to form a coating layer B having a thickness of 200 nm. Next, aluminum oxide was vapor-deposited on the coating layer B by a vacuum vapor deposition method to form an inorganic oxide layer C having a thickness of 8 nm. Next, the coating liquid for coating layer formation shown later was applied onto the inorganic oxide layer C by gravure printing, and heat-treated at 180°C for 60 seconds to form a coating layer D having a thickness of 230 nm.

Next, a coating liquid for primer layer formation shown later was applied onto the coating layer D by gravure printing, and heat-treated at 80°C for 60 seconds to form a first primer layer having a thickness of 250 nm.

Through the above operations, a laminated body C1-1 having the first primer layer, the first barrier layer, and the first base material in presented order was obtained. The first barrier layer has the inorganic oxide layer A, the coating layer B, the inorganic oxide layer C, and the coating layer D in presented order from the first base material side. Through the above operations, a first protective film having the first primer layer, the first barrier layer, and the first base material in presented order for use in Example C1 was obtained. The total thickness of the first protective film, T1, for use in Example C1 was 12.696 µm.

### <First laminated body>

A coating liquid 1 for a quantum dot-containing layer having the formulation shown later was applied onto the surface of the first primer layer side of the first protective film, dried, and then irradiated with a first ultraviolet ray to form a first quantum dot-containing layer, thereby obtaining a first laminated body having a first quantum dot-containing layer on the first primer layer of the first protective film for use in Example C1. The first quantum dot-containing layer side was irradiated with the first ultraviolet ray. The integrated dose of the first ultraviolet ray was 90 mJ/cm². The thickness of the first quantum dot-containing layer, T3-1, is 25 µm.

### <Second protective film>

The laminated body C1-1 was used as a second protective film for use in Example C1. The second protective film has a second primer layer, a second barrier layer, and a second base material in presented order. The total thickness of the second protective film, T2, for use in Example C1 was 12.696 µm.

### <Second laminated body>

A coating liquid 1 for a quantum dot-containing layer having the formulation shown later was applied onto the surface of the second primer layer side of the second protective film, dried, and then irradiated with a second ultraviolet ray to form a second quantum dot-containing layer, thereby obtaining a second laminated body having a second quantum dot-containing layer on the second primer layer of the second protective film for use in Example C1. The second quantum dot-containing layer side was irradiated with the second ultraviolet ray. The integrated dose of the second ultraviolet ray was 90 mJ/cm². The thickness of the second quantum dot-containing layer, T3-2, is 25 µm.

### <Preparation of wavelength conversion sheet>

A surface of the first laminated body on the first quantum dot-containing layer side and a surface of the second laminated body on the side having the second quantum dot-containing layer were attached to each other to laminate the first laminated body and the second laminated body. Next, the first laminated body side was irradiated with a third ultraviolet ray to allow the curing of the first quantum dot-containing layer and second quantum dot-containing layer to proceed, thereby obtaining a wavelength conversion sheet of Example C1. The integrated dose of the third ultraviolet ray was 600 mJ/cm². In the wavelength conversion sheet of Example C1, the first laminated body and the second laminated body are laminated in such a manner that the first quantum dot-containing layer side of the first laminated body and the second quantum dot-containing layer side of the second laminated body face each other.

### <Preparation of coating liquid for coating layer formation>

Prepared was a coating liquid for coating layer formation the same as that for Examples of the first embodiment.

### <Coating liquid for primer layer formation>

Prepared was a coating liquid for primer layer formation the same as the coating liquid 1 for primer layer formation for Examples of the first embodiment.

### <Coating liquid 1 for quantum dot-containing layer>

Prepared was a coating liquid 1 for a quantum dot-containing layer the same as that for Examples of the first embodiment.

### [Example C2]

A wavelength conversion sheet of Example C2 was obtained in the same manner as in Example C1, except that the thickness of the first base material was changed to 23 µm and the thicknesses of the first and second quantum dot-containing layers were each changed to 35 µm. The total thickness of the first protective film, T1, for use in Example C2 was 23.696 µm. The total thickness of the second protective film, T2, for use in Example C2 was 23.696 µm.

### [Comparative Example C1]

The same first protective film and second protective film as in Example C1 were provided as a first protective film and second protective film for use in Comparative Example C1.

A coating liquid 1 for a quantum dot-containing layer having the above formulation was applied onto the surface of the first primer layer side of the first protective film, and dried to obtain a laminated body C1-2 having a quantum dot-containing layer on the first primer layer of the first protective film.

Next, the laminated body C1-2 and the second protective film were laminated such that the surface of the quantum dot-containing layer side of the laminated body C1-2 and the surface of the second primer layer side of the second protective film faced each other, and the resultant was then irradiated with a first ultraviolet ray, thereby obtaining a wavelength conversion sheet of Comparative Example C1. The thickness of the quantum dot-containing layer, T3, is 50 µm. The first protective film side was irradiated with the first ultraviolet ray. The integrated dose of the first ultraviolet ray was 700 mJ/cm².

### [Comparative Example C2]

The same first protective film and second protective film as in Example C2 were provided as a first protective film and second protective film for use in Comparative Example C2.

A coating liquid 1 for a quantum dot-containing layer having the above formulation was applied onto the surface of the first primer layer side of the first protective film, and dried to obtain a laminated body C1-3 having a quantum dot-containing layer on the first primer layer of the first protective film.

Next, the laminated body C1-3 and the second protective film were laminated such that the surface of the quantum dot-containing layer side of the laminated body C1-3 and the surface of the second primer layer side of the second protective film faced each other, and the resultant was then irradiated with a first ultraviolet ray, thereby obtaining a wavelength conversion sheet of Comparative Example C2. The thickness of the quantum dot-containing layer, T3, is 70 µm. The first protective film side was irradiated with the first ultraviolet ray. The integrated dose of the first ultraviolet ray was 700 mJ/cm².

### [Example C3]

A wavelength conversion sheet of Example C3 was obtained in the same manner as in Example C1, except that the coating liquid 1 for a quantum dot-containing layer was changed to the following coating liquid 2 for a quantum dot-containing layer.

### <Coating liquid 2 for a quantum dot-containing layer>

Prepared was a coating liquid 2 for a quantum dot-containing layer the same as that for Examples of the first embodiment.

### [Comparative Example C3]

A wavelength conversion sheet of Comparative Example C3 was obtained in the same manner as in Comparative Example C1, except that the coating liquid 1 for a quantum dot-containing layer was changed to the above coating liquid 2 for a quantum dot-containing layer.

### [Example C4]

### <Providing protective film>

The same first protective film and second protective film as in Example C1 were provided as a first protective film and second protective film for use in Example C4.

### <First laminated body>

A coating liquid 1 for a quantum dot-containing layer having the above formulation was applied onto the surface of the first primer layer side of the first protective film, dried, and then irradiated with a first ultraviolet ray to form a first quantum dot-containing layer, thereby obtaining a first laminated body having the first quantum dot-containing layer on the first primer layer of the first protective film for use in Example C4. The first quantum dot-containing layer side was irradiated with the first ultraviolet ray. The integrated dose of the first ultraviolet ray was 600 mJ/cm². The integrated dose is a dose more than the theoretical dose value that causes the ultraviolet-curable resin composition in the coating liquid 1 for a quantum dot-containing layer to completely cure. The thickness of the first quantum dot-containing layer, T3-1, is 25 µm.

### <Second laminated body>

A coating liquid 1 for a quantum dot-containing layer having the above formulation was applied onto the surface of the second primer layer side of the second protective film, dried, and then irradiated with a second ultraviolet ray to form a second quantum dot-containing layer, thereby obtaining a second laminated body having the second quantum dot-containing layer on the second primer layer of the second protective film for use in Example C4. The second quantum dot-containing layer side was irradiated with the second ultraviolet ray. The integrated dose of the second ultraviolet ray was 600 mJ/cm². The integrated dose is a dose more than the theoretical dose value that causes the ultraviolet-curable resin composition in the coating liquid 1 for a quantum dot-containing layer to completely cure. The thickness of the second quantum dot-containing layer, T3-2, is 25 µm.

### <Preparation of wavelength conversion sheet>

An acrylic adhesive was applied onto the first quantum dot-containing layer of the first laminated body by gravure printing, and dried to form an adhesive layer having a thickness of 7 µm. Next, a wavelength conversion sheet of Example C4 was obtained by attaching a surface of the second laminated body on the side having the second quantum dot-containing layer to the adhesive layer.

### [Example C5]

### <First protective film>

The laminated body C1-1 was used as a first protective film for use in Example C5. The first protective film has a first primer layer, a first barrier layer, and a first base material in presented order.

### <First laminated body>

A coating liquid 1 for a quantum dot-containing layer having the above formulation was applied onto the surface of the first primer layer side of the first protective film, dried, and then irradiated with a first ultraviolet ray to form a first quantum dot-containing layer, thereby obtaining a first laminated body having the first quantum dot-containing layer on the first primer layer of the first protective film for use in Example C5. The first quantum dot-containing layer side was irradiated with the first ultraviolet ray. The integrated dose of the first ultraviolet ray was 90 mJ/cm². The thickness of the first quantum dot-containing layer, T3-1, is 25 µm.

### <Second protective film>

An inorganic oxide layer A, a coating layer B, an inorganic oxide layer C, and a coating layer D were formed over a surface of a second base material (biaxially stretched PET film having easy adherence layer on one surface, thickness: 12 µm) on the side without an easy adherence layer in the same manner as for the laminated body C1-1.

Next, the above coating liquid for primer layer formation was applied onto the surface of the easy adherence layer side of the second base material by gravure printing, and heat-treated at 80°C for 60 seconds to form a second primer layer having a thickness of 250 nm.

Through the above operations, a laminated body C1-4 having the second primer layer, the second base material, and the second barrier layer in presented order was obtained. The second barrier layer has the inorganic oxide layer A, the coating layer B, the inorganic oxide layer C, and the coating layer D in presented order from the second base material side. The laminated body C1-4 was used as a second protective film for use in Example C5.

The total thickness of the first protective film, T1, and the total thickness of the second protective film, T2, each protective film being for use in Example C5, were both 12.696 µm.

### <Second laminated body>

A coating liquid 1 for a quantum dot-containing layer having the above formulation was applied onto the surface of the second primer layer side of the second protective film, dried, and then irradiated with a second ultraviolet ray to form a second quantum dot-containing layer, thereby obtaining a second laminated body having the second quantum dot-containing layer on the second primer layer of the second protective film for use in Example C5. The second quantum dot-containing layer side was irradiated with the second ultraviolet ray. The integrated dose of the second ultraviolet ray was 90 mJ/cm². The thickness of the second quantum dot-containing layer, T3-2, is 25 µm.

### <Preparation of wavelength conversion sheet>

The first laminated body and the second laminated body were laminated by attaching a surface of the first laminated body on the first quantum dot-containing layer side and a surface of the second laminated body on the side having the second quantum dot-containing layer to each other. Next, the first laminated body side was irradiated with a third ultraviolet ray to allow the curing of the first quantum dot-containing layer and second quantum dot-containing layer to proceed, thereby obtaining a wavelength conversion sheet of Example C1. The integrated dose of the third ultraviolet ray was 600 mJ/cm². In the wavelength conversion sheet of Example C1, the first laminated body and the second laminated body are laminated in such a manner that the first quantum dot-containing layer side of the first laminated body and the second quantum dot-containing layer side of the second laminated body face each other. In the wavelength conversion sheet of Example C5, the layers constituting the first protective film and the layers constituting the second protective film are asymmetrically disposed with respect to the first quantum dot-containing layer and the second quantum dot-containing layer.

The wavelength conversion sheet of Example C5 and the wavelength conversion sheet of Example C1 are different in layer configuration of the second protective film (the second protective film of Example C5 has a second primer layer, a second base material, and a second barrier layer in presented order; on the other hand, the second protective film of Example C1 has a second primer layer, a second barrier layer, and a second base material in presented order).

**[Table 3]**

| | | Coating liquid for quantum dot-containing layer | Integrated dose (mJ/cm²) | | | Thickness (µm) | | | | | Curling | |
|---|---|---|---|---|---|---|---|---|---|---|---|---|
| | | | First | Second | Third | T1 | T2 | T3-1 | T3-2 | T3 | Ave(Max) (mm) | Rank |
| Example | C1 | 1 | 90 | 90 | 600 | 12.696 | 12.696 | 25 | 25 | - | 7.0 | A |
| | C2 | 1 | 90 | 90 | 600 | 23.696 | 23.696 | 35 | 35 | - | 5.0 | AA |
| | C3 | 2 | 90 | 90 | 600 | 12.696 | 12.696 | 25 | 25 | - | 7.5 | A |
| | C4 | 1 | 600 | 600 | - | 12.696 | 12.696 | 25 | 25 | - | 8.5 | A- |
| | C5 | 1 | 90 | 90 | 600 | 12.696 | 12.696 | 25 | 25 | - | 7.0 | A |
| Comparative Example | C1 | 1 | 700 | - | - | 12.696 | 12.696 | - | - | 50 | 18.0 | C |
| | C2 | 1 | 700 | - | - | 23.696 | 23.696 | - | - | 70 | 16.0 | C |
| | C3 | 2 | 700 | - | - | 12.696 | 12.696 | - | - | 50 | 18.0 | C |

As demonstrated in Table 3, it can be confirmed that the production methods of Examples of the third embodiment for a wavelength conversion sheet are capable of suppressing the curling of the wavelength conversion sheet.

### Reference Signs List

10: First quantum dot protective film
11: First primer layer
12: First base material
13: First barrier layer
14: First adhesive layer
15: Protective base material for first barrier layer
20: Second quantum dot protective film
21: Second primer layer
22: Second base material
23: Second barrier layer
30: Quantum dot-containing layer
31: First quantum dot-containing layer
32: Second quantum dot-containing layer
200: Wavelength conversion sheet
201: Sample prepared from wavelength conversion sheet
500: Horizontal stage

## Claims

1. A method for producing a wavelength conversion sheet, comprising the following steps 1 to 3:
step 1: a step of forming a quantum dot-containing layer on a first primer layer of a first quantum dot protective film comprising at least the first primer layer, a first base material, a first barrier layer, and a protective base material for the first barrier layer by applying a coating liquid for quantum dot-containing layer formation onto the first primer layer, wherein the protective base material for the first barrier layer for use therein has been formed to be peelable from the first quantum dot protective film;
step 2: a step of obtaining an in-process product of a wavelength conversion sheet by attaching a surface of a second quantum dot protective film comprising at least a second primer layer, a second base material, and a second barrier layer to the quantum dot-containing layer, wherein the surface side attaching to the quantum dot-containing layer is on a second primer layer side of the second quantum dot protective film, and the in-process product comprises the first quantum dot protective film, the quantum dot-containing layer, and the second quantum dot protective film in presented order; and
step 3: a step of irradiating the quantum dot-containing layer of the in-process product with an ultraviolet ray.

2. The method for producing a wavelength conversion sheet according to claim 1, wherein the coating liquid for quantum dot-containing layer formation comprises an ultraviolet-curable resin composition.

3. The method for producing a wavelength conversion sheet according to claim 1, the production method further comprising the following step 4:
step 4: a step of peeling the protective base material for the first barrier layer from the first quantum dot protective film.

4. The method for producing a wavelength conversion sheet according to claim 1,
wherein the first barrier layer and the second barrier layer each comprise an inorganic oxide layer and a coating layer.
